# EUROPÄISCHE PATENTANMELDUNG

(11) **EP 1 566 579 A2**
(43) Veröffentlichungstag der Anmeldung: **24.08.2005**
(21) Anmeldenummer: 05002733.3
(22) Anmeldetag: 10.02.2005
(51) Int. Cl.: F16H 63/32

(54) **Vorrichtung zur Übertragung von Schaltbewegungen in einem Kraftfahrzeug-Schaltgetriebe und Verfahren zu deren Herstellung**

(30) Priorität: 19.02.2004 DE 102004008185
(71) Anmelder: Selzer Fertigungstechnik GmbH & Co.KG, 35759 Driedorf-Roth (DE)
(72) Erfinder: Volk, Matthias, 35625 Hüttenberg (DE); Horz, Willi, 35753 Greifenstein-Nenderoth (DE)
(74) Vertreter: Oppermann, Mark

(57) **Zusammenfassung**

Es wird eine Vorrichtung zur Übertragung von Schaltbewegungen in einem Kraftfahrzeug-Schaltgetriebe offenbart, die eine Schaltschiene (10) und eine an der Schaltschiene angeordnete Schaltgabel (12) aufweist. Letztere hat einen Grundkörper (14) und ggf. einen mit dem Grundkörper verbundenen Träger (16) zum Lagern der Schaltgabel an der Schaltschiene. Erfindungsgemäß ist der Grundkörper mit der Schaltschiene oder dem Träger form- und ggf. kraftschlüssig zu einem den Hauptanteil der im Betrieb des Kraftfahrzeug-Schaltgetriebes an der Schaltgabel auftretenden Kräfte und Momente übertragenden Verbund (18) zusammengesetzt, welcher zumindest im Bereich der Verbindungsstellen (20) von Grundkörper, Schaltschiene bzw. Träger mit einem Kunststoff (22) umspritzt ist, um Grundkörper, Schaltschiene bzw. Träger in ihrem form- und ggf. kraftschlüssigen Verbund dauerhaft zu fixieren. Im Ergebnis wird eine kompakte Vorrichtung geschaffen, welche die im Betrieb an der Schaltgabel auftretenden Kräfte und Momente ohne die Gefahr übermäßiger Verformungen zuverlässig zu übertragen vermag und zugleich leicht und wirtschaftlich herzustellen ist.

## Beschreibung

### TECHNISCHES GEBIET

Die Erfindung bezieht sich auf eine eine Schaltschiene und eine Schaltgabel aufweisende Vorrichtung zur Übertragung von Schaltbewegungen in einem Kraftfahrzeug-Schaltgetriebe nach dem Oberbegriff des Patentanspruchs 1, wie sie massenweise in der Automobilindustrie zum Einsatz kommen. Die Erfindung schließt des weiteren auch ein Verfahren zur Herstellung einer solchen Vorrichtung ein.

Wenn in den vorliegenden Unterlagen von einer "Schaltgabel" die Rede ist, ist damit in funktioneller Hinsicht das Bauteil gemeint, welches in seinem im Kraftfahrzeug-Schaltgetriebe montierten Zustand in an sich bekannter Weise dazu dient, Schaltbewegungen von einem Betätigungselement, wie einem an einer Schaltwelle oder einem Schaltgestänge vorgesehenen Schaltfinger, auf eine Schaltmuffe zu übertragen, um die Gangstufe zu wechseln. Nicht aber soll der Begriff "Schaltgabel" in geometrischer Hinsicht einschränkend verstanden werden, d.h. Schaltgabeln erfindungsgemäßer Vorrichtungen können auch eine von der Gabelform abweichende Form aufweisen.

### STAND DER TECHNIK

Schaltgabeln gemäß dem Stand der Technik haben einen zumeist gabelförmigen Grundkörper, der mit in der Regel zwei oder drei Eingriffsabschnitten, auch "Padden" genannt, versehen ist, über welche die Schaltgabel in ihrem im Kraftfahrzeug-Schaltgetriebe montierten Zustand mit der zugeordneten Schaltmuffe, auch "Schiebemuffe" genannt, wirkverbunden ist, so daß diese vermittels der Schaltgabel in axialer Richtung verschoben werden kann. Wenn der Grundkörper der Schaltgabel nicht direkt mit der Schaltstange verbunden bzw. Bestandteil eines entsprechenden Verbundbauteils ist (siehe z.B. die EP 0 633 412 B1), ist der Grundkörper fest mit einem Träger der Schaltgabel verbunden, welcher einen Lagerabschnitt aufweist, über den die Schaltgabel in ihrem im Kraftfahrzeug-Schaltgetriebe montierten Zustand an der Schaltschiene gelagert ist.

Je nach Bauart des Kraftfahrzeug-Schaltgetriebes kann diese Lagerung der Schaltgabel an der Schaltschiene verschieden ausgeführt sein. So kann hier ein Festlager vorgesehen sein, bei dem der Träger der Schaltgabel etwa aus einer eine Durchgangsbohrung als Lagerabschnitt aufweisenden Buchse ausgebildet ist, die auf eine im Querschnitt komplementär geformte, im Kraftfahrzeug-Schaltgetriebe längsverschieblich gelagerte Schaltschiene aufgeschoben und mit dieser fest verbunden, z.B. verstiftet ist ("Festlagervariante"). Bei einer anderen bekannten Konstruktion ist der Träger der Schaltgabel, beispielsweise wiederum in der Form einer eine Durchgangsbohrung aufweisenden Buchse, über ein Axiallager, z.B. ein in die Durchgangsbohrung eingepreßtes Gleit- oder Wälzlager, längsverschieblich an der Schaltschiene geführt ("Axiallagervariante"). Auch sind Konstruktionen bekannt (siehe z.B. die EP 1 079 154 A2 der Anmelderin), bei denen der Träger der Schaltgabel an der Schaltschiene schwenkgelagert ist, um die Übertragung von Schwingungen in das Schaltgestänge zu vermeiden ("Schwenklagervariante").

Je nach Lagervariante der Schaltgabel - Festlager-, Axiallager- bzw. Schwenklagervariante - wird zudem die Übertragung von Bewegungen von einem Betätigungselement des Kraftfahrzeug-Schaltgetriebes, z.B. einem Schaltfinger, der an einem Schaltgestänge oder einer mittels des Schaltgestänges oder eines Stellantriebs um ihre Längsachse schwenkbaren Schaltwelle sitzt, auf die Schaltgabel auf unterschiedliche Weise bewerkstelligt. Während bei der Axiallagervariante die Schaltgabel selbst einen Mitnehmer aufweist, mit dem z.B. der Schaltfinger eingreift, um Bewegungen von etwa der Schaltwelle auf die Schaltgabel zu übertragen, ist bei der Schwenklagervariante die Schaltschiene mit einem solchen Mitnehmer versehen. Bei der Festlagervariante hingegen sind - ebenso wie bei der eingangs erwähnten einteiligen Ausführung von Schaltgabel und Schaltschiene - beide Mitnehmerausbildungen möglich: Der Mitnehmer kann an der Schaltgabel selbst oder aber an der Schaltschiene vorgesehen sein.

Bei einer am Markt befindlichen, gattungsgemäßen Konstruktion einer Schaltgabel in Festlagervariante mit integriertem Mitnehmer bestehen der Grundkörper und der Mitnehmer jeweils aus einem metallischen Flachmaterial und sind an einer metallischen Führungsbuchse als Träger angeschweißt, die auf eine im Querschnitt kreisförmige Schaltschiene aufgeschoben und mit dieser verstiftet ist.

Obgleich diese bekannte Schaltgabel den im Betrieb des Kraftfahrzeug-Schaltgetriebes an der Schaltgabel auftretenden Kräften und Momenten hervorragend zu widerstehen vermag, ist ein Nachteil dieses Stands der Technik darin zu sehen, daß das Verschweißen von Grundkörper, Mitnehmer und Führungsbuchse einen nicht unerheblichen vorrichtungstechnischen Aufwand bedingt. Zudem besteht die Gefahr, daß es beim Schweißvorgang zu einem Verzug der Schaltgabel kommt, so daß diese nach dem Schweißvorgang ggf. in weiteren Arbeitsgängen noch gerichtet oder spanend nachbearbeitet werden muß. Dies alles ist in der Massenfertigung unerwünscht, weil kostenintensiv.

Um eine einfachere Fertigung und damit eine Kostenreduzierung bei der Fertigung zu ermöglichen, wurde des weiteren in der EP 0 633 412 B1 eine Betätigungsvorrichtung für eine Schiebemuffe in einem Kraftfahrzeug-Stufengetriebe vorgeschlagen, mit einer entlang ihrer Achse verschiebbaren Schaltstange, an der eine Schaltgabel und ein Mitnehmer starr angeordnet sind, sowie der Besonderheit, daß die Betätigungsvorrichtung als ein Kunststoff-Metall-Verbundteil ausgebildet ist, bei dem ein Metallteil, das den Mitnehmer sowie einen Kern für die Schaltstange bildet, mit einem Kunststoff umspritzt ist und die Schaltgabel ausschließlich aus dem Kunststoff besteht.

Zwar läßt sich die in der EP 0 633 412 B1 offenbarte Betätigungsvorrichtung einfacher fertigen als die oben beschriebene Schweißkonstruktion. Dieser Stand der Technik ist aber insofern verbesserungsbedürftig, als die ausschließlich aus Kunststoff bestehende Schaltgabel einen sehr großen Bauraum beansprucht, der in modernen Kraftfahrzeug-Schaltgetrieben nicht immer verfügbar ist. Würde die aus Kunststoff bestehende Schaltgabel aber kleiner dimensioniert, bestünde die Gefahr übermäßiger Verformungen an der Schaltgabel, die einen einwandfreien Schaltvorgang verhindern, wenn nicht gar zu einem Bruch der Schaltgabel führen könnten.

Schließlich ist aus der JP 59-218522 A eine Schaltgabel bekannt, bei der der gabelförmige Grundkörper und der hülsenartige Träger einstückig aus Kunststoff ausgebildet sind, wobei der Grundkörper noch mit einer hufeisenförmigen metallischen Armierung ausgesteift ist. Auch bei diesem Stand der Technik besteht allerdings die Gefahr, daß es infolge übermäßiger Deformationen insbesondere am mechanisch hoch belasteten Übergangsbereich zwischen Grundkörper und Träger zu Ausfällen kommen könnte.

Der Erfindung liegt die Aufgabe zugrunde, eine im Hinblick auf die eingangs geschilderten Schaltgabelvarianten möglichst universell einsetzbare, kompakte Vorrichtung zur Übertragung von Schaltbewegungen in einem Kraftfahrzeug-Schaltgetriebe zu schaffen, die die im Betrieb an der Schaltgabel auftretenden Kräfte und Momente ohne die Gefahr übermäßiger Verformungen zuverlässig zu übertragen vermag und zugleich - gemessen am gattungsbildenden Stand der Technik - leichter und wirtschaftlicher herzustellen ist. Die Erfindungsaufgabe umfaßt auch die Angabe eines hierfür besonders geeigneten Herstellungsverfahrens.

Diese Aufgabe wird durch die im Patentanspruch 1 bzw. 14 angegebenen Merkmale gelöst. Vorteilhafte bzw. zweckmäßige Weiterbildungen der Erfindung sind Gegenstand der Patentansprüche 2 bis 13, 15 und 16.

### DARSTELLUNG DER ERFINDUNG

Erfindungsgemäß ist bei einer Vorrichtung zur Übertragung von Schaltbewegungen in einem Kraftfahrzeug-Schaltgetriebe, die eine Schaltschiene und eine an der Schaltschiene angeordnete Schaltgabel umfaßt, welche einen Grundkörper und ggf. einen mit dem Grundkörper verbundenen Träger zum Lagern der Schaltgabel an der Schaltschiene aufweist, der Grundkörper mit der Schaltschiene oder - im Falle des Vorhandenseins eines Trägers - mit dem Träger form- und ggf. kraftschlüssig zu einem den Hauptanteil der im Betrieb des Kraftfahrzeug-Schaltgetriebes an der Schaltgabel auftretenden Kräfte und Momente übertragenden Verbund zusammengesetzt, welcher zumindest im Bereich der Verbindungsstellen von Grundkörper, Schaltschiene bzw. Träger mit einem Kunststoff umspritzt ist, um Grundkörper, Schaltschiene bzw. Träger in ihrem form- und ggf. kraftschlüssigen Verbund dauerhaft zu fixieren.

Nach einem Grundgedanken der Erfindung wird also durch form- und ggf. kraftschlüssiges Zusammensetzen von Grundkörper und Schaltschiene oder Grundkörper und Träger eine Art Gerippe geschaffen, welches alleine im Stande ist, den Hauptanteil, je nach Auslegung z.B. ca. 80% der an der Schaltgabel im Betrieb auftretenden Kräfte und Momente zu übertragen. Dieses Gerippe wird durch eine Kunststoffumspritzung an wenigstens den Verbindungsstellen der jeweiligen Bestandteile zusammengehalten, wobei die Kunststoffumspritzung dann nur einen Restanteil, bei dem obigen Beispiel ca. 20% der an der Schaltgabel im Betrieb auftretenden Kräfte und Momente zu übertragen hat. Infolge dieser Ausgestaltung baut die erfindungsgemäße Vorrichtung vorteilhaft kompakt, ohne daß zugleich die Gefahr besteht, daß die Vorrichtung im Betrieb des Kraftfahrzeug-Schaltgetriebes übermäßig verformt wird. Da darüber hinaus die Bestandteile der Vorrichtung beim Fügen nicht wie bei dem Schweißvorgang gemäß dem gattungsbildenden Stand der Technik stark erhitzt werden, kann es nicht zu einem Wärmeverzug kommen, so daß die hiermit im Stand der Technik verbundenen Nacharbeiten vorteilhaft entfallen. Ein weiterer wesentlicher Vorteil der erfindungsgemäßen Vorrichtung wird darin gesehen, daß das Material von Grundkörper und Schaltschiene bzw. Träger im Gegensatz zum gattungsbildenden Stand der Technik gänzlich unabhängig vom Fügeverfahren gewählt und somit im Hinblick auf funktionelle Erfordernisse wie Härte, Reibbeiwert, etc. optimiert werden kann. So kann der Grundkörper beispielsweise aus einem nicht schweißbaren, hochfesten Sinterwerkstoff bestehen, während zugleich der Träger etwa im Falle einer Schaltgabel in Axiallagervariante z.B. aus einer Gleitlagerbronze gebildet werden kann. Es ist schließlich bevorzugt, wenn dem Formschluß der Verbundteile noch ein Kraftschluß überlagert ist, was zum einen die Handhabbarkeit des vorgefügten Verbunds z.B. beim Einlegen in die Spritzgießform verbessert, weil dabei der Verbund durch den Kraftschluß zusammengehalten wird, und zum anderen auch das Verformungsverhalten des fertigen, mit Kunststoff umspritzten Bauteils im Betrieb positiv beeinflußt.

Die erfindungsgemäße Vorrichtung wird vorzugsweise mit einem Verfahren hergestellt, welches die folgenden Schritte umfaßt:
Vorfertigen des Grundkörpers und der Schaltschiene bzw. des Trägers,
form- und ggf. kraftschlüssiges Zusammensetzen des Grundkörpers mit der Schaltschiene bzw. dem Träger zu dem den Hauptanteil der im Betrieb des Kraftfahrzeug-Schaltgetriebes an der Schaltgabel auftretenden Kräfte und Momente übertragenden Verbund,
Einlegen des Verbunds aus Grundkörper und Schaltschiene bzw. Träger in eine Spritzgießform,
dauerhaftes Fixieren des Verbunds aus Grundkörper und Schaltschiene bzw. Träger durch Umspritzen des Verbunds zumindest im Bereich der Verbindungsstellen von Grundkörper und Schaltschiene bzw. Träger mit Kunststoff,
Ausformen des entstandenen Teils aus der Spritzgießform und
ggf. Montage des entstandenen Teils an der Schaltschiene.

Als Ergebnis dieses denkbar einfachen Verfahrens ergibt sich das zumindest aus Grundkörper, Träger und Kunststoffumspritzung oder Grundkörper, Schaltschiene und Kunststoffumspitzung bestehende Bauteil (Schaltgabel oder Schaltschiene mit fest daran angebrachter Schaltgabel) vorteilhaft als "werkzeugfallendes" Teil, d.h. als ein Teil, welches nach dem Ausformen aus der Spritzgießform keiner Nachbearbeitung mehr bedarf. Im Falle eines zumindest aus Grundkörper, Träger und Kunststoffumspritzung bestehenden Bauteils ist dieses lediglich noch an der Schaltschiene zu montieren bevor die Montage im Kraftfahrzeug-Schaltgetriebe erfolgen kann.

In einer bevorzugten Ausgestaltung der erfindungsgemäßen Vorrichtung kann der Träger durch eine Buchse ausgebildet sein, die außenumfangsseitig mit einer Radialnut versehen ist, während der Grundkörper aus einem Flachmaterial besteht und eine im wesentlichen U-förmige Aussparung aufweist. Hierbei hat die Radialnut der Buchse eine Breite, die im wesentlichen der Dicke des Grundkörpers entspricht, während die Aussparung im Grundkörper eine lichte Breite aufweist, die im wesentlichen dem Durchmesser der Buchse im Nutgrund der Radialnut entspricht. Bei diesem Ausführungsbeispiel ist der Grundkörper zur Ausbildung des Verbunds derart auf die Buchse aufgesteckt, daß die Radialnut und die Aussparung ineinandergreifen. Es ist ersichtlich, daß bei diesem Verbund schon vor der Kunststoffumspritzung zwischen Grundkörper und Buchse ein Formschluß besteht, der Relativbewegungen dieser Teile in einer Richtung parallel zur Buchsenmittelachse sowie senkrecht dazu (ausgenommen ein Auseinanderbewegen dieser Teile) verhindert. Diesem Formschluß kann den jeweiligen Erfordernissen entsprechend durch geeignete Abstimmung der Toleranzen zwischen Radialnutbreite und Grundkörperdicke (Untermaß bei der Radialnutbreite bzw. Übermaß bei der Grundkörperdicke) und/oder zwischen lichter Aussparungsbreite am Grundkörper und Buchsendurchmesser im Nutgrund der Radialnut (Untermaß bei der Aussparungsbreite bzw. Übermaß beim Buchsendurchmesser) auf einfache Weise noch ein Kraftschluß überlagert werden.

In einer dazu alternativen Ausgestaltung der erfindungsgemäßen Vorrichtung kann der Träger durch eine Buchse ausgebildet sein, die außenumfangsseitig unter Ausbildung eines Ringbundes mit einem Absatz versehen ist, während der Grundkörper aus einem Flachmaterial besteht und eine kreisförmige Öffnung aufweist. Hierbei hat die Buchse an ihrem Absatz einen Außendurchmesser, der im wesentlichen dem Innendurchmesser der Öffnung im Grundkörper entspricht. Bei diesem Ausführungsbeispiel ist zur Ausbildung des Verbunds die Buchse mit ihrem Absatz soweit in die Öffnung des Grundkörpers eingesteckt, daß der Ringbund der Buchse am Grundkörper anliegt. Aufgrund des so hergestellten Formschlusses können Buchse und Grundkörper schon vor der Kunststoffumspritzung weder weiter aufeinander zu noch in einer Richtung senkrecht zur Buchsenmittelachse auseinander bewegt werden. Auch hier kann den jeweiligen Erfordernissen entsprechend dem Formschluß auf einfache Weise ein Kraftschluß überlagert werden, indem die Durchmessertoleranzen zwischen dem Buchsenabsatz und der Grundkörperöffnung geeignet aufeinander abgestimmt werden (Übermaß beim Buchsenabsatz bzw. Untermaß bei der Grundkörperöffnung).

Muß die Schaltgabel bezüglich der Schaltschiene weder längsverschieblich (Axiallagervariante) noch schwenkbewegbar (Schwenklagervariante) sein, kann in Abhängigkeit von der Bauart des Kraftfahrzeug-Schaltgetriebes der Träger auch gänzlich entfallen und der Grundkörper direkt an der Schaltschiene angebracht werden. In diesem Zusammenhang ist z.B. eine Ausgestaltung denkbar, bei der eine aus einem Rundmaterial bestehende Schaltschiene mit einem Absatz versehen ist, auf den analog dem zuletzt diskutierten Ausführungsbeispiel ein aus einem Flachmaterial bestehender, gelochter Grundkörper aufgeschoben ist, um den erfindungsgemäßen Verbund auszubilden.

Bevorzugt, (u.a.) weil die Schaltschiene weniger schwächend, ist hier jedoch eine Ausgestaltung, bei der die Schaltschiene aus einem Rundmaterial besteht und außenumfangsseitig mit einer Radialnut versehen ist, während der Grundkörper aus einem Flachmaterial besteht und eine im wesentlichen U-förmige Aussparung aufweist. Dabei hat die Radialnut in der Schaltschiene eine Breite, die im wesentlichen der Dicke des Grundkörpers entspricht, während die Aussparung im Grundkörper eine lichte Breite aufweist, die im wesentlichen dem Durchmesser der Schaltschiene im Nutgrund der Radialnut entspricht. Zur Ausbildung des erfindungsgemäßen Verbunds ist hier der Grundkörper derart auf die Schaltschiene aufgesteckt, daß die Radialnut und die Aussparung ineinandergreifen. Dem so analog dem zuerst diskutierten Ausführungsbeispiel hergestellten Formschluß zwischen Grundkörper und Schaltschiene kann wiederum den jeweiligen Handhabungs- bzw. Verformungserfordernissen entsprechend leicht ein Kraftschluß überlagert werden, indem die Toleranzen zwischen Radialnutbreite und Grundkörperdicke (Untermaß bei der Radialnutbreite bzw. Übermaß bei der Grundkörperdicke) und/oder zwischen lichter Aussparungsbreite am Grundkörper und Schaltschienendurchmesser im Nutgrund der Radialnut (Untermaß bei der Aussparungsbreite bzw. Übermaß beim Schaltschienendurchmesser) geeignet abgestimmt werden.

Zweckmäßig kann bei dieser Ausgestaltung der Vorrichtung die Schaltschiene wenigstens auf einer Seite der Radialnut mit einer Mikroverzahnung od.dgl. versehen sein, die ebenfalls mit dem Kunststoff umspritzt ist, um die Schaltgabel auf einfache Weise gegen ein Verdrehen bezüglich der Schaltschiene zu sichern.

In einer weiteren Alternative einer erfindungsgemäßen Vorrichtung, bei der der Grundkörper direkt an der Schaltschiene angebracht ist, können sowohl die Schaltschiene als auch der Grundkörper aus einem Flachmaterial bestehen und jeweils mit einem Schlitz versehen sein. Dabei weist der Schlitz in der Schaltschiene eine lichte Breite auf, die im wesentlichen der Dicke des Grundkörpers entspricht, während der Schlitz im Grundkörper eine lichte Breite hat, die im wesentlichen der Dicke der Schaltschiene entspricht. Um den erfindungsgemäßen Verbund auszubilden, ist hier der Grundkörper derart auf die Schaltschiene aufgesteckt, daß die Schlitze ineinandergreifen. Es ist ersichtlich, daß so wiederum ein Formschluß zwischen Grundkörper und Schaltschiene geschaffen ist, der, solange der Verbund im Bereich der Verbindungsstellen von Grundkörper und Schaltschiene noch nicht mit dem Kunststoff umspritzt ist, lediglich ein Auseinanderziehen dieser Teile gestattet. Auch diesem Formschluß kann den jeweiligen Handhabungs- bzw. Verformungserfordernissen entsprechend leicht ein Kraftschluß überlagert werden, wozu lediglich die Toleranzen zwischen der Schlitzbreite an der Schaltschiene und/oder dem Grundkörper und der Dicke des jeweils anderen Teils (Untermaß bei der Schlitzbreite bzw. Übermaß bei der Teildicke) geeignet aufeinander abzustimmen sind.

Soll die erfindungsgemäße Vorrichtung ferner einen Mitnehmer aufweisen, mittels dessen Bewegungen von einem Betätigungselement des Kraftfahrzeug-Schaltgetriebes auf die Schaltgabel übertragbar sind, so kann in dem Verbund vorteilhaft auch der Mitnehmer mit dem Grundkörper oder dem Träger form- und ggf. kraftschlüssig zusammengesetzt und dieser Verbund zur dauerhaften Fixierung ebenfalls im Bereich der Verbindungsstellen von Mitnehmer und Grundkörper bzw. Träger mit dem Kunststoff umspritzt sein.

Vorzugsweise wird hierbei der Mitnehmer vorgefertigt und mit dem Grundkörper oder dem Träger form- und ggf. kraftschlüssig zusammengesetzt bevor der sodann ebenfalls den Mitnehmer aufweisende Verbund in die Spritzgießform eingelegt und auch im Bereich der Verbindungsstellen von Mitnehmer und Grundkörper bzw. Träger mit dem Kunststoff umspritzt wird, so daß lediglich ein Spritzgießvorgang erforderlich ist.

In einer bevorzugten Ausgestaltung der den Mitnehmer umfassenden Vorrichtung bestehen sowohl der Grundkörper als auch der Mitnehmer aus einem Flachmaterial und sind jeweils mit einem Schlitz versehen, wobei der Schlitz im Mitnehmer eine lichte Breite aufweist, die im wesentlichen der Dicke des Grundkörpers entspricht, während der Schlitz im Grundkörper eine lichte Breite hat, die im wesentlichen der Dicke des Mitnehmers entspricht, und wobei der Mitnehmer derart auf den Grundkörper aufgesteckt ist, daß die Schlitze ineinandergreifen. Auch hier besteht ein Formschluß zwischen Grundkörper und Mitnehmer, der, solange der Verbund im Bereich der Verbindungsstellen von Grundkörper und Mitnehmer noch nicht mit dem Kunststoff umspritzt ist, lediglich ein Auseinanderziehen dieser Teile zuläßt. Analog der zuletzt diskutierten Verbindung von Grundkörper und Schaltschiene kann diesem Formschluß den jeweiligen Handhabungs- und Verformungserfordernissen entsprechend auf einfache Weise ein Kraftschluß überlagert werden, wozu wiederum lediglich die Toleranzen zwischen der Schlitzbreite an dem Grundkörper und/oder dem Mitnehmer und der Dicke des jeweils anderen Teils (Untermaß bei der Schlitzbreite bzw. Übermaß bei der Teildicke) geeignet aufeinander abzustimmen sind.

Liegen die Angriffsorte zwischen dem Grundkörper und der Schaltmuffe einerseits und dem Mitnehmer und dem zugeordneten Betätigungselement des Kraftfahrzeug-Schaltgetriebes andererseits weiter auseinander, bietet sich eine Ausgestaltung der Vorrichtung an, bei der der Träger der Schaltgabel durch eine Buchse ausgebildet ist, die außenumfangsseitig mit einer Radialnut versehen ist, während der Mitnehmer aus einem Flachmaterial besteht und eine im wesentlichen U-förmige Aussparung aufweist. Hierbei hat die Radialnut in der Buchse eine Breite, die im wesentlichen der Dicke des Mitnehmers entspricht, während dessen Aussparung eine lichte Breite aufweist, die im wesentlichen dem Durchmesser der Buchse im Nutgrund der Radialnut entspricht. Bei dieser Ausgestaltung der Vorrichtung ist der Mitnehmer derart auf die Buchse aufgesteckt, daß deren Radialnut und die Aussparung des Mitnehmers ineinandergreifen. Analog dem zuerst diskutierten Ausführungsbeispiel besteht somit ein Formschluß zwischen dem Träger und dem Mitnehmer, der durch geeignete Abstimmung der Toleranzen zwischen der Breite der Radialnut und der Dicke des Mitnehmers (Untermaß bei der Radialnutbreite bzw. Übermaß bei der Mitnehmerdicke) und/oder zwischen lichter Aussparungsbreite am Mitnehmer und Buchsendurchmesser im Nutgrund der Radialnut (Untermaß bei der Aussparungsbreite bzw. Übermaß beim Buchsendurchmesser) noch leicht mit einem Kraftschluß überlagert werden kann. Ebenfalls, wenngleich weniger bevorzugt, ist hier eine Ausgestaltung denkbar, bei der der buchsenförmige Träger außenumfangsseitig unter Ausbildung eines Ringbundes mit einem Absatz versehen ist, während der aus einem Flachmaterial bestehende Mitnehmer eine kreisförmige Öffnung aufweist, deren Innendurchmesser im wesentlichen dem Außendurchmesser des Absatzes entspricht, wobei der buchsenförmige Träger soweit in die Öffnung des Mitnehmers eingesteckt ist, daß dessen Ringbund am Mitnehmer anliegt. Form- und ggf. Kraftschluß ergeben sich hier analog dem oben an zweiter Stelle diskutierten Ausführungsbeispiel.

Im weiteren Verfolg des Erfindungsgedankens kann die Schaltgabel mit wenigstens einem Eingriffsabschnitt versehen sein, über den die Schaltgabel mit der zugeordneten Schaltmuffe des Kraftfahrzeug-Schaltgetriebes wirkverbindbar ist, mit der Besonderheit, daß auch dieser Eingriffsabschnitt durch die Kunststoffumspritzung ausgebildet ist, was in vorteilhafter Weise eine geräuscharme Wirkverbindung zwischen Schaltgabel und Schaltmuffe gewährleistet.

Wenn hingegen eine höhere mechanische Festigkeit an dem wenigstens einen Eingriffsabschnitt der Schaltgabel erforderlich oder erwünscht ist, über den die Schaltgabel mit der zugeordneten Schaltmuffe des Kraftfahrzeug-Schaltgetriebes wirkverbindbar ist, kann die Vorrichtung auch so ausgestaltet sein, daß der Eingriffsabschnitt durch einen Teil des Grundkörpers ausgebildet ist, der über die Kunststoffumspritzung vorsteht.

Als weitere Alternative kann ferner der wenigstens eine Eingriffsabschnitt der Schaltgabel, über den die Schaltgabel mit der Schaltmuffe des Kraftfahrzeug-Schaltgetriebes wirkverbindbar ist, durch ein Formteil ausgebildet sein, welches zur Komplettierung des erfindungsgemäßen Verbunds auf den Grundkörper aufgesteckt ist, wobei der Verbund auch im Bereich der Verbindungsstellen von Grundkörper und Formteil mit dem Kunststoff umspritzt ist. Diese auch die Verwendung von gleichen Formteilen bei verschiedenen Schaltgabeln, d.h. Baukastenlösungen ermöglichende Alternative ist insbesondere insofern vorteilhaft, als der Reibpartnerwerkstoff zu der Schaltmuffe unabhängig vom Werkstoff des Grundkörpers und der Kunststoffumspritzung gewählt werden kann.

Vorzugsweise wird hierbei das wenigstens eine Formteil als Eingriffsabschnitt der Schaltgabel vorgefertigt und auf den Grundkörper der Schaltgabel aufgesteckt bevor der sodann ebenfalls das Formteil aufweisende Verbund in die Spritzgießform eingelegt und auch im Bereich der Verbindungsstellen von Grundkörper und Formteil mit dem Kunststoff umspritzt wird, so daß für die Fixierung des gesamten Verbunds in vorteilhafter Weise nur ein Spritzgießvorgang erforderlich ist.

Schließlich kann es sich bei dem Kunststoff der Umspritzung um vorzugsweise glasfaserverstärktes Polyamid 66 handeln, das nicht nur gute Festigkeitseigenschaften bei hoher Zähigkeit und Schlagzähigkeit besitzt, sondern darüber hinaus auch gute Gleiteigenschaften und einen hohen Verschleißwiderstand hat.

### KURZE BESCHREIBUNG DER ZEICHNUNGEN

Im folgenden wird die Erfindung anhand bevorzugter Ausführungsbeispiele unter Bezugnahme auf die beigefügten Zeichnungen näher erläutert, wobei gleiche oder entsprechende Teile mit den gleichen Bezugszeichen versehen sind. In den Zeichnungen zeigen:
- Fig. 1: eine perspektivische Darstellung einer Vorrichtung nach einem ersten Ausführungsbeispiel der Erfindung, bei der die auf der mit strichpunktierten Linien angedeuteten Schaltschiene sitzende Schaltgabel einen aus Grundkörper und Träger form- und kraftschlüssig zusammengesetzten Verbund aufweist, der mit Kunststoff umspritzt ist, wobei die vom Kunststoff bedeckten Körperkanten des Verbunds mit gestrichelten Linien gezeigt sind,
- Fig. 2: eine in der Darstellungsweise der von Fig. 1 entsprechende Vorderansicht der Schaltgabel gemäß Fig. 1,
- Fig. 3: eine in der Darstellungsweise der von Fig. 1 entsprechende Seitenansicht der Schaltgabel von links in Fig. 2,
- Fig. 4: eine in der Darstellungsweise der von Fig. 1 entsprechende Unteransicht der Schaltgabel gemäß Fig. 2,
- Fig. 5: eine perspektivische Darstellung des aus Grundkörper und Träger form- und kraftschlüssig zusammengesetzten, noch nicht mit Kunststoff umspritzten Verbunds der Schaltgabel gemäß Fig. 1,
- Fig. 6: eine Vorderansicht des in Fig. 5 gezeigten Verbunds,
- Fig. 7: eine Seitenansicht des Verbunds von links in Fig. 6,
- Fig. 8: eine Unteransicht des Verbunds gemäß Fig. 6,
- Fig. 9: eine perspektivische Darstellung des Grundkörpers der Schaltgabel gemäß Fig. 1,
- Fig. 10: eine Vorderansicht des in Fig. 9 gezeigten Grundkörpers,
- Fig. 11: eine perspektivische Darstellung des Trägers der Schaltgabel gemäß Fig. 1,
- Fig. 12: eine Längsschnittansicht des Trägers gemäß Fig. 11,
- Fig. 13: eine perspektivische Darstellung einer Vorrichtung nach einem zweiten Ausführungsbeispiel der Erfindung, bei der die auf der mit strichpunktierten Linien angedeuteten Schaltschiene sitzende Schaltgabel einen aus Grundkörper und Träger form- und kraftschlüssig zusammengesetzten, mit Kunststoff umspritzten Verbund aufweist, von dem die vom Kunststoff bedeckten Körperkanten mit gestrichelten Linien gezeigt sind,
- Fig. 14: eine in der Darstellungsweise der von Fig. 13 entsprechende Vorderansicht der Schaltgabel gemäß Fig. 13,
- Fig. 15: eine in der Darstellungsweise der von Fig. 13 entsprechende Seitenansicht der Schaltgabel von links in Fig. 14,
- Fig. 16: eine in der Darstellungsweise der von Fig. 13 entsprechende Unteransicht der Schaltgabel gemäß Fig. 14,
- Fig. 17: eine perspektivische Darstellung des aus Grundkörper und Träger form- und kraftschlüssig zusammengesetzten, noch nicht mit Kunststoff umspritzten Verbunds der Schaltgabel gemäß Fig. 13,
- Fig. 18: eine Vorderansicht des in Fig. 17 gezeigten Verbunds,
- Fig. 19: eine Seitenansicht des Verbunds von links in Fig. 18,
- Fig. 20: eine Unteransicht des Verbunds gemäß Fig. 18,
- Fig. 21: eine perspektivische Darstellung des Grundkörpers der Schaltgabel gemäß Fig. 13,
- Fig. 22: eine Vorderansicht des in Fig. 21 gezeigten Grundkörpers,
- Fig. 23: eine perspektivische Darstellung des Trägers der Schaltgabel gemäß Fig. 13,
- Fig. 24: eine Längsschnittansicht des Trägers gemäß Fig. 23,
- Fig. 25: eine perspektivische Darstellung einer Vorrichtung nach einem dritten Ausführungsbeispiel der Erfindung, bei der die auf der mit strichpunktierten Linien angedeuteten Schaltschiene sitzende Schaltgabel einen aus Grundkörper, Träger und Mitnehmer form- und kraftschlüssig zusammengesetzten Verbund aufweist, der mit Kunststoff umspritzt ist, wobei die vom Kunststoff bedeckten Körperkanten des Verbunds mit gestrichelten Linien gezeigt sind,
- Fig. 26: eine in der Darstellungsweise der von Fig. 25 entsprechende Vorderansicht der Schaltgabel gemäß Fig. 25,
- Fig. 27: eine in der Darstellungsweise der von Fig. 25 entsprechende Seitenansicht der Schaltgabel von links in Fig. 26,
- Fig. 28: eine in der Darstellungsweise der von Fig. 25 entsprechende Unteransicht der Schaltgabel gemäß Fig. 26,
- Fig. 29: eine perspektivische Darstellung des aus Grundkörper, Träger und Mitnehmer form- und kraftschlüssig zusammengesetzten, noch nicht mit Kunststoff umspritzten Verbunds der Schaltgabel gemäß Fig. 25,
- Fig. 30: eine Vorderansicht des in Fig. 29 gezeigten Verbunds,
- Fig. 31: eine Seitenansicht des Verbunds von links in Fig. 30,
- Fig. 32: eine Unteransicht des Verbunds gemäß Fig. 30,
- Fig. 33: eine Vorderansicht des Grundkörpers der Schaltgabel gemäß Fig. 25,
- Fig. 34: eine Vorderansicht des Mitnehmers der Schaltgabel gemäß Fig. 25,
- Fig. 35: eine in der Darstellungsweise der von Fig. 25 entsprechende perspektivische Darstellung einer ersten Variante der in Fig. 25 gezeigten Vorrichtung nach dem dritten Ausführungsbeispiel der Erfindung, bei der Eingriffsabschnitte der Schaltgabel durch Teile des Grundkörpers ausgebildet sind, die über die Kunststoffumspritzung vorstehen,
- Fig. 36: eine in der Darstellungsweise der von Fig. 35 entsprechende, abgebrochene Vorderansicht der Schaltgabel gemäß Fig. 35,
- Fig. 37: eine abgebrochene Vorderansicht des Grundkörpers der Schaltgabel gemäß Fig. 35,
- Fig. 38: eine in der Darstellungsweise der von Fig. 25 entsprechende perspektivische Darstellung einer zweiten Variante der in Fig. 25 gezeigten Vorrichtung nach dem dritten Ausführungsbeispiel der Erfindung, bei der Eingriffsabschnitte der Schaltgabel durch Formteile ausgebildet sind, welche zur Komplettierung des Verbunds auf den Grundkörper ausgesteckt sind, wobei der Verbund auch im Bereich der Verbindungsstellen zwischen dem Grundkörper und den Formteilen mit dem Kunststoff umspritzt ist,
- Fig. 39: eine abgebrochene, perspektivische Darstellung des mit den Formteilen versehenen, noch nicht mit Kunststoff umspritzten Verbunds der Schaltgabel gemäß Fig. 38,
- Fig. 40: eine abgebrochene Vorderansicht des Grundkörpers der Schaltgabel gemäß Fig. 38,
- Fig. 41: eine gegenüber den Fig. 38 bis 40 im Maßstab vergrößerte, perspektivische Darstellung eines Formteils der Schaltgabel gemäß Fig. 38,
- Fig. 42: eine Vorderansicht des in Fig. 41 gezeigten Formteils,
- Fig. 43: eine Seitenansicht des in Fig. 42 gezeigten Formteils,
- Fig. 44: eine Unteransicht des in Fig. 42 gezeigten Formteils,
- Fig. 45: eine perspektivische Darstellung einer Vorrichtung nach einem vierten Ausführungsbeispiel der Erfindung, bei der die auf der mit strichpunktierten Linien angedeuteten Schaltschiene sitzende Schaltgabel einen aus Grundkörper, Träger und Mitnehmer form- und kraftschlüssig zusammengesetzten Verbund aufweist, der mit Kunststoff umspritzt ist, wobei die vom Kunststoff bedeckten Körperkanten des Verbunds mit gestrichelten Linien gezeigt sind,
- Fig. 46: eine in der Darstellungsweise der von Fig. 45 entsprechende Vorderansicht der Schaltgabel gemäß Fig. 45,
- Fig. 47: eine in der Darstellungsweise der von Fig. 45 entsprechende Seitenansicht der Schaltgabel von links in Fig. 46,
- Fig. 48: eine in der Darstellungsweise der von Fig. 45 entsprechende Unteransicht der Schaltgabel gemäß Fig. 46,
- Fig. 49: eine perspektivische Darstellung des aus Grundkörper, Träger und Mitnehmer form- und kraftschlüssig zusammengesetzten, noch nicht mit Kunststoff umspritzten Verbunds der Schaltgabel gemäß Fig. 45,
- Fig. 50: eine Vorderansicht des in Fig. 49 gezeigten Verbunds,
- Fig. 51: eine Seitenansicht des Verbunds von links in Fig. 50,
- Fig. 52: eine Unteransicht des Verbunds gemäß Fig. 50,
- Fig. 53: eine perspektivische Darstellung des Mitnehmers der Schaltgabel gemäß Fig. 45,
- Fig. 54: eine Vorderansicht des in Fig. 53 gezeigten Mitnehmers,
- Fig. 55: eine Unteransicht des in Fig. 54 gezeigten Mitnehmers,
- Fig. 56: eine perspektivische Darstellung des Trägers der Schaltgabel gemäß Fig. 45,
- Fig. 57: eine Längsschnittansicht des Trägers gemäß Fig. 56,
- Fig. 58: eine abgebrochene, perspektivische Darstellung einer Vorrichtung nach einem fünften Ausführungsbeispiel der Erfindung, mit einteiliger Ausbildung von Schaltschiene und Schaltgabel, bei der ein aus Schaltschiene und Grundkörper der Schaltgabel form- und kraftschlüssig zusammengesetzter Verbund vorgesehen ist, der mit Kunststoff umspritzt ist, wobei die vom Kunststoff bedeckten Körperkanten des Verbunds mit gestrichelten Linien gezeigt sind,
- Fig. 59: eine in der Darstellungsweise der von Fig. 58 entsprechende Vorderansicht der Vorrichtung gemäß Fig. 58,
- Fig. 60: eine in der Darstellungsweise der von Fig. 58 entsprechende, abgebrochene Seitenansicht der Vorrichtung von links in Fig. 59,
- Fig. 61: eine in der Darstellungsweise der von Fig. 58 entsprechende, abgebrochene Unteransicht der Vorrichtung gemäß Fig. 59,
- Fig. 62: eine abgebrochene, perspektivische Darstellung des aus Schaltschiene und Grundkörper form- und kraftschlüssig zusammengesetzten, noch nicht mit Kunststoff umspritzten Verbunds der Vorrichtung gemäß Fig. 58,
- Fig. 63: eine Vorderansicht des in Fig. 62 gezeigten Verbunds,
- Fig. 64: eine abgebrochene Seitenansicht des Verbunds von links in Fig. 63,
- Fig. 65: eine abgebrochene Unteransicht des Verbunds gemäß Fig. 63,
- Fig. 66: eine abgebrochene Vorderansicht der Schaltschiene der Vorrichtung gemäß Fig. 58,
- Fig. 67: eine abgebrochene Vorderansicht des Grundkörpers der Schaltgabel der Vorrichtung gemäß Fig. 58,
- Fig. 68: eine perspektivische Darstellung einer Vorrichtung nach einem sechsten Ausführungsbeispiel der Erfindung, mit einteiliger Ausbildung von Schaltschiene und Schaltgabel, bei der ein aus Schaltschiene und Grundkörper der Schaltgabel form- und kraftschlüssig zusammengesetzter Verbund vorgesehen ist, der mit Kunststoff umspritzt ist, wobei die vom Kunststoff bedeckten Körperkanten des Verbunds mit gestrichelten Linien gezeigt sind,
- Fig. 69: eine in der Darstellungsweise der von Fig. 68 entsprechende Vorderansicht der Vorrichtung gemäß Fig. 68,
- Fig. 70: eine in der Darstellungsweise der von Fig. 68 entsprechende Seitenansicht der Vorrichtung von links in Fig. 69,
- Fig. 71: eine in der Darstellungsweise der von Fig. 68 entsprechende Unteransicht der Vorrichtung gemäß Fig. 69,
- Fig. 72: eine perspektivische Darstellung des aus Schaltschiene und Grundkörper form- und kraftschlüssig zusammengesetzten, noch nicht mit Kunststoff umspritzten Verbunds der Vorrichtung gemäß Fig. 68,
- Fig. 73: eine Vorderansicht des in Fig. 72 gezeigten Verbunds,
- Fig. 74: eine Seitenansicht des Verbunds von links in Fig. 73,
- Fig. 75: eine Unteransicht des Verbunds gemäß Fig. 73,
- Fig. 76: eine Vorderansicht des Grundkörpers der Schaltgabel der Vorrichtung gemäß Fig. 68 und
- Fig. 77: eine Vorderansicht der Schaltschiene der Vorrichtung gemäß Fig. 68.

### DETAILLIERTE BESCHREIBUNG DER AUSFÜHRUNGSBEISPIELE

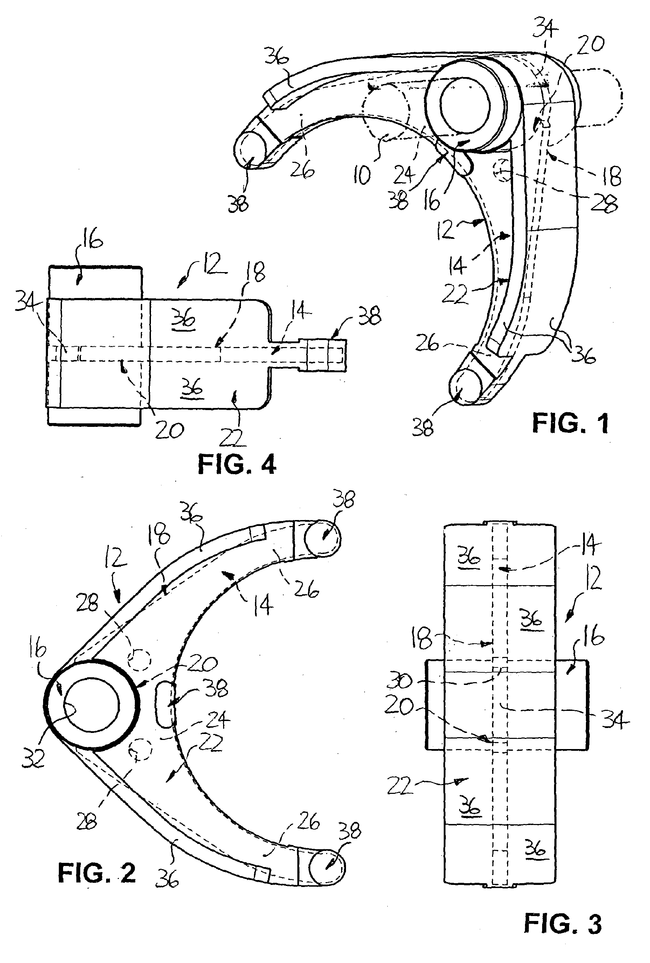

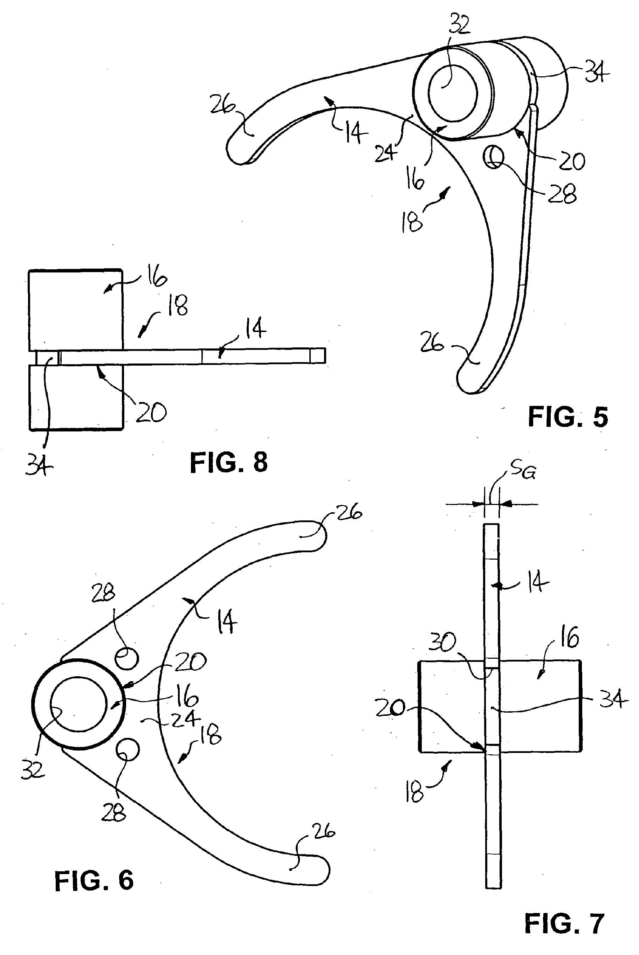

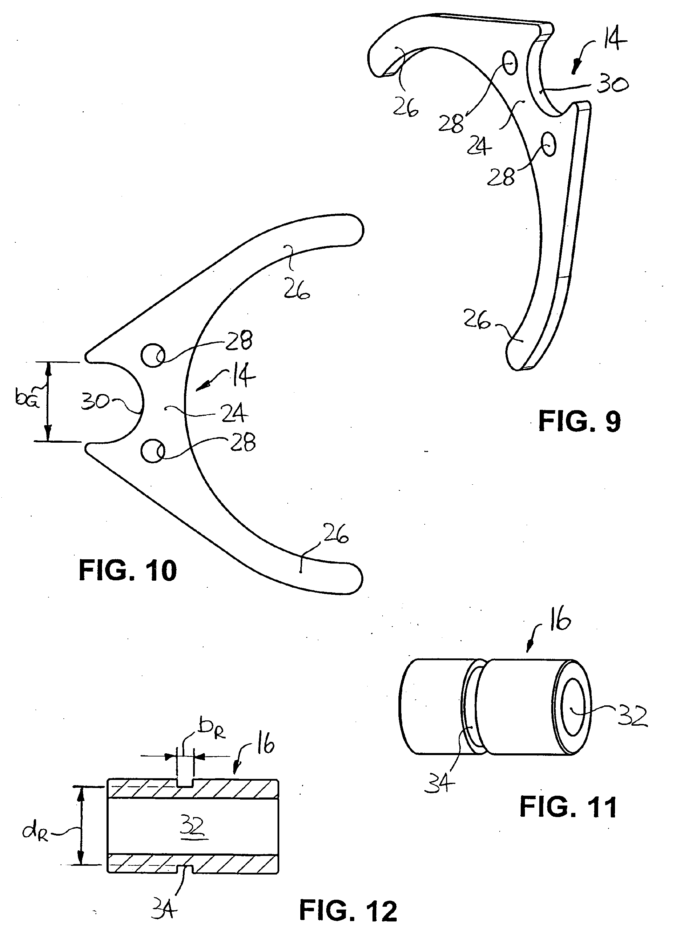

Die Fig. 1 bis 12 veranschaulichen ein erstes Ausführungsbeispiel einer Vorrichtung zur Übertragung von Schaltbewegungen in einem Kraftfahrzeug-Schaltgetriebe, die eine an sich bekannte, zylindrische und lediglich in Fig. 1 mit strichpunktierten Linien gezeigte Schaltschiene 10 und eine an der Schaltschiene 10 angeordnete, auf besondere Art und Weise ausgebildete Schaltgabel 12 aufweist. Die Schaltgabel 12 hat einen Grundkörper 14 und einen mit dem Grundkörper 14 verbundenen Träger, im dargestellten Ausführungsbeispiel eine hohlzylindrische Buchse 16, zum Lagern der Schaltgabel 12 an der Schaltschiene 10. Nach einem wesentlichen Merkmal des ersten Ausführungsbeispiels ist, wie nachfolgend noch näher erläutert werden wird, der in den Fig. 9 und 10 einzeln gezeigte Grundkörper 14 mit der in den Fig. 11 und 12 einzeln dargestellten Buchse 16 form- und ggf. kraftschlüssig zu einem den Hauptanteil der im Betrieb des Kraftfahrzeug-Schaltgetriebes an der Schaltgabel 12 auftretenden Kräfte und Momente übertragenden Verbund 18 (siehe insbesondere die Fig. 5 bis 8) zusammengesetzt, welcher gemäß den Fig. 1 bis 4 zumindest im Bereich der Verbindungsstellen 20 von Grundkörper 14 und Träger, d.h. Buchse 16 mit einem Kunststoff 22 umspritzt ist, um den Grundkörper 14 und die Buchse 16 in ihrem form- und ggf. kraftschlüssigen Verbund 18 dauerhaft zu fixieren.

Wie insbesondere in den Fig. 9 und 10 zu erkennen ist, besteht der Grundkörper 14 der Schaltgabel 12 aus einem metallischen Flachmaterial mit planparallelen Hauptflächen. Bei dem Flachmaterial kann es sich um ein Stahlblech handeln, welches durch Feinschneiden form- bzw. konturgebend bearbeitet ist, so daß sich sämtliche Konturflächen im wesentlichen senkrecht zu den Hauptflächen erstrecken. Den jeweiligen Härte- und Festigkeitserfordernissen entsprechend kann der Grundkörper 14 aber auch aus einem Sinterwerkstoff bestehen. In diesem Fall erhält der Grundkörper 14 seine Form bzw. Kontur durch den Sinterprozeß selbst, d.h. durch definiertes "Zusammenbacken" feiner Metallkörner bei hohen Temperaturen, wobei das Sintergut nicht geschmolzen wird.

Gemäß insbesondere Fig. 10 weist der Grundkörper 14 im wesentlichen die Form einer Gabel auf, mit einer Basis 24, von der sich zwei Arme 26 in bilateraler Symmetrie wegerstrecken. Die Arme 26 bilden hierbei mit ihren inneren, einander zugewandten bzw. aneinander grenzenden Konturflächen einen Halbkreis aus, der im im Kraftfahrzeug-Schaltgetriebe montierten Zustand der Schaltgabel 12 die Schalt- bzw. Schiebemuffe (nicht dargestellt) in an sich bekannter Weise umgreift. Im Übergangsbereich zwischen der Basis 24 und dem jeweiligen Arm 26 ist im dargestellten Ausführungsbeispiel jeweils eine Aussparung in Form eines kreisrunden Lochs 28 vorgesehen. In dem in den Fig. 1 bis 4 gezeigten, fertigen Zustand der Schaltgabel 12 werden diese Löcher 28 vom Kunststoff 22 durchgriffen und geben somit dem Kunststoff 22 am Verbund 18 zusätzlichen Halt. Darüber hinaus kann durch die Lage, die Form und die Größe der Löcher 28 Einfluß genommen werden auf das Verformungsverhalten der fertigen Schaltgabel 12. Auch dienen die Löcher 28 dem Abbau von Spannungsspitzen im Grundkörper 14. Ausgehend von der äußeren Konturfläche des Grundkörpers 14 ist dessen Basis 24 schließlich mit einer im wesentlichen U-förmigen Öffnung bzw. Aussparung 30 versehen, die auf noch näher zu beschreibende Weise der Ausbildung des Verbunds 18 dient.

Die in den Fig. 11 und 12 gezeigte Buchse 16, bei der es sich vorzugsweise um ein Drehteil handelt, kann unabhängig vom Material des Grundkörpers 14 den jeweiligen Funktionserfordernissen entsprechend z.B. aus Stahl, einer Leichtmetall-, wie einer Aluminiumlegierung, oder einem Gleitlagerwerkstoff, beispielsweise Messing, bestehen. Ein Gleitlagerwerkstoff bietet sich an, wenn die Buchse 16 mit ihrer Innenumfangsfläche 32 ohne weitere Lagerteile längsverschieblich an der Schaltschiene 10 gelagert bzw. geführt werden soll. Bei einer Schaltgabel 12 in Festlagervariante hingegen, deren auf die Schaltschiene 10 aufgeschobene Buchse 16 fest mit der Schaltschiene 10 verbunden, z.B. verstiftet (nicht dargestellt) werden soll, ist insbesondere aus Festigkeitsgründen den erstgenannten Werkstoffen der Vorzug zu geben.

Gemäß insbesondere den Fig. 11 und 12 ist die Buchse 16 des weiteren außenumfangsseitig und in Längsrichtung gesehen im wesentlichen mittig mit einer Radialnut 34 versehen, die ebenfalls der Ausbildung des Verbunds 18 dient. Genauer gesagt hat die Radialnut 34 eine Breite b_{R} (Fig. 12), die im wesentlichen der konstanten Dicke s_{G} (Fig. 7) des Grundkörpers 14 entspricht, während der Durchmesser d_{R} (Fig. 12) der Buchse 16 im Nutgrund der Radialnut 34 im wesentlichen der lichten Breite b_{G} (Fig. 10) der Aussparung 30 in der Basis 24 des Grundkörpers 14 entspricht.

Zur Ausbildung des Verbunds 18 ist der Grundkörper 14 entsprechend den Fig. 5 bis 8 auf die Buchse 16 aufgesteckt, so daß die Radialnut 34 der Buchse 16 und die Aussparung 30 des Grundkörpers 14 ineinandergreifen, wobei die Mittelachse der Buchse 16 senkrecht bezüglich einer gedachten, durch den Grundkörper 14, genauer einer der Hauptflächen des Grundkörpers 14 definierten Ebene steht. Es ist ersichtlich, daß somit bei dem in den Fig. 5 bis 8 gezeigten Verbund ein Formschluß zwischen dem Grundkörper 14 und der Buchse 16 besteht, der Relativbewegungen dieser Teile in einer Richtung parallel zur Mittelachse der Buchse 16 (Betätigungsrichtungen der Schaltgabel 12) sowie senkrecht dazu (ausgenommen ein Auseinanderbewegen von Grundkörper 14 und Buchse 16 in Fig. 8) verhindert. Zusätzlich zu diesem Formschluß kann insbesondere zur Verbesserung der Handhabbarkeit des vorgefügten Verbunds 18 ein Kraftschluß bestehen, wozu lediglich die verbindungsrelevanten Abmessungen zur Ausbildung eines Preßverbands bzw. -sitzes geeignet zu tolerieren sind (Untermaß bei der Breite b_{R} der Radialnut 34 bzw. Übermaß bei der Dicke s_{G} des Grundkörpers 14 und/oder Übermaß beim Durchmesser d_{R} der Buchse 16 im Nutgrund der Radialnut 34 bzw. Untermaß bei der lichten Breite b_{G} der Aussparung 30 im Grundkörper 14).

Den Fig. 1 bis 4 sind noch weitere Details der Kunststoffumspritzung 22 zu entnehmen: Im hier dargestellten Ausführungsbeispiel steht gemäß insbesondere den Fig. 3 und 4 lediglich die Buchse 16 beidseitig aus dem Kunststoff 22 heraus vor, im übrigen ist der Verbund 18 aus Grundkörper 14 und Buchse 16 vollständig vom Kunststoff 22 überdeckt. Dabei bildet der Kunststoff 22, bei dem es sich um vorzugsweise glasfaserverstärktes Polyamid 66 handeln kann, auch Versteifungsrippen 36 der Schaltgabel 12 aus. Zur weiteren Aussteifung der Schaltgabel 12 können hier den jeweiligen Festigkeitserfordernissen entsprechend auch noch weitere, vorzugsweise metallische Versteifungsteile (nicht gezeigt) mit im Kunststoff 22 eingebettet sein. Insbesondere die Fig. 1 und 2 zeigen schließlich noch drei Eingriffsabschnitte 38 der Schaltgabel 12, über die die Schaltgabel 12 in an sich bekannter Weise mit der Schalt- bzw. Schiebemuffe (nicht dargestellt) des Kraftfahrzeug-Schaltgetriebes wirkverbindbar ist. Von den gemäß Fig. 4 beidseitig über die angrenzenden Bereiche der Schaltgabel 12 erhabenen Eingriffsabschnitten 38, die im dargestellten Ausführungsbeispiel ebenfalls durch die Kunststoffumspritzung 22 ausgebildet sind, befinden sich zwei jeweils am Ende der Grundkörperarme 26, während der mittlere Eingriffsabschnitt 38 der Buchse 16 gegenüberliegend an der Grundkörperbasis 24 angeformt ist.

Die unter Bezugnahme auf die Fig. 1 bis 12 beschriebene Vorrichtung wird wie folgt hergestellt. Zunächst werden der Grundkörper 14 und die Buchse 16 sintertechnisch bzw. spanend vorgefertigt, so daß diese Teile wie in den Fig. 9 bis 12 gezeigt vorliegen. Sodann wird der Grundkörper 14 mit der Buchse 16 zu dem den Hauptanteil der im Betrieb des Kraftfahrzeug-Schaltgetriebes an der Schaltgabel 12 auftretenden Kräfte und Momente übertragenden Verbund 18 form- und ggf. kraftschlüssig zusammengesetzt, wie er in den Fig. 5 bis 8 dargestellt ist. Handelt es sich um einen rein formschlüssigen Verbund 18, so erfolgt das Fügen von Grundkörper 14 und Buchse 16 im wesentlichen kraftfrei. Soll dem Formschluß durch Vorsehen geeigneter Toleranzen an den Verbindungsstellen 20 von Grundkörper 14 und Buchse 16 aber ein Kraftschluß überlagert sein, was insbesondere aus Gründen der besseren Handhabbarkeit des Verbunds 18 - die einzelnen Teile des Verbunds 18 fallen dann nicht von alleine auseinander - bevorzugt ist, erfolgt das Fügen von Grundkörper 14 und Buchse 16 unter Aufbringung definierter Fügekräfte, um zwischen diesen Teilen einen Preßsitz herzustellen.

Als nächstes wird der Verbund 18 aus Grundkörper 14 und Buchse 16 in eine Kunststoff-Spritzgießform (nicht gezeigt) eingelegt. Derartige Spritzgießformen sind dem Fachmann geläufig, weshalb auf eine Darstellung der Spritzgießform verzichtet wurde. Nach Schließen der Spritzgießform wird ein durch Wärme und Druck temporär plastifizierter Kunststoff 22, etwa Polyamid 66, ggf. unter Hinzufügung loser Fasern, wie Glas-, Kevlar- oder Kohlefasern, in die Spitzgießform eingespitzt. Die Spritzgießform ist hierbei so geformt und der Verbund 18 aus Grundkörper 14 und Buchse 16 ist hierbei so in der Spritzgießform gehalten, daß der Verbund 18 zumindest im Bereich der Verbindungsstellen 20 von Grundkörper 14 und Buchse 16 mit dem Kunststoff 22 umspritzt wird. Im Ergebnis wird der Verbund 18 aus Grundkörper 14 und Buchse 16 durch den Kunststoff 22 dauerhaft fixiert. Sodann wird die Spitzgießform geöffnet und das entstandene Teil, d.h. die Schaltgabel 12 wird aus der Spritzgießform ausgeformt.

In der Folge kann die Schaltgabel 12 ohne die Notwendigkeit einer Nachbearbeitung an der Schaltschiene 10 montiert werden. Je nach Lagervariante der Schaltgabel 12 kann hierbei die Schaltgabel 12 - etwa in einem über den Kunststoff 22 vorstehenden Bereich der Buchse 16 (siehe Fig. 3 rechts) - mit der Schaltschiene 10 verbohrt und verstiftet werden (Festlagervariante), oder ein Gleit- oder Wälzlager kann innenumfangsseitig in die Buchse 16 eingepreßt werden, wenn nicht die Buchse 16 selbst das Gleitlager für die Schaltgabel 12 ausbildet (Axiallagervariante).

Die Funktion der aus Schaltschiene 10 und Schaltgabel 12 gebildeten Vorrichtung im Kraftfahrzeug-Schaltgetriebe, d.h. die dort durch diese Vorrichtung bewirkte Übertragung von Schaltbewegungen, unterscheidet sich schließlich nicht von vorbekannten Lösungen und ist dem Fachmann auch hinreichend geläufig, bedarf mithin an dieser Stelle keiner weiteren Erläuterung.

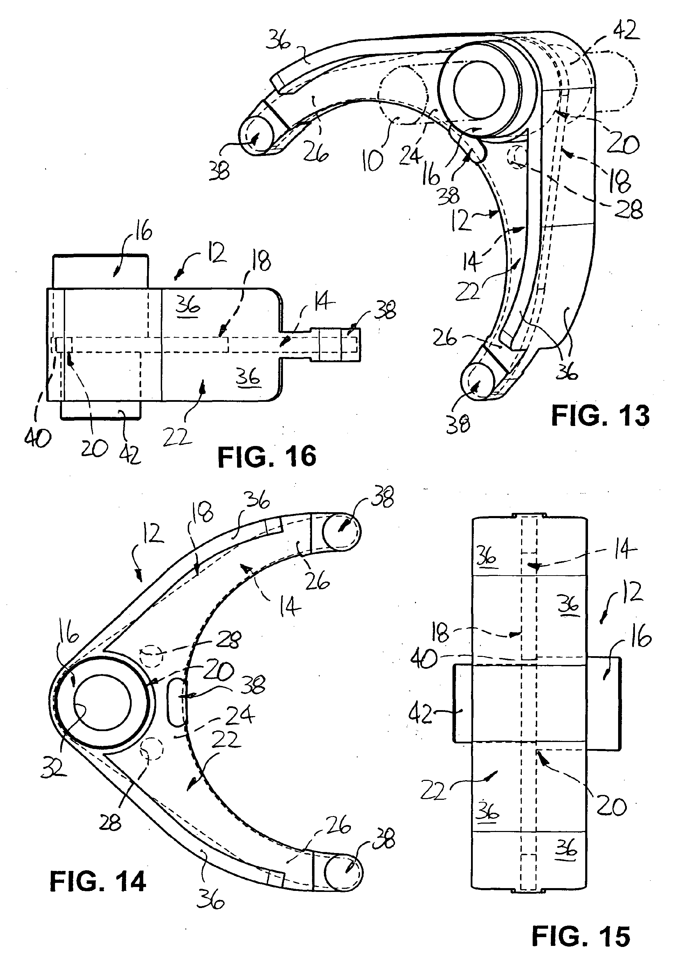

Die Fig. 13 bis 24 veranschaulichen ein zweites Ausführungsbeispiel einer Vorrichtung zur Übertragung von Schaltbewegungen in einem Kraftfahrzeug-Schaltgetriebe, welches nachfolgend nur insoweit beschrieben werden soll, als es sich vom unter Bezugnahme auf die Fig. 1 bis 12 beschriebenen ersten Ausführungsbeispiel unterscheidet.

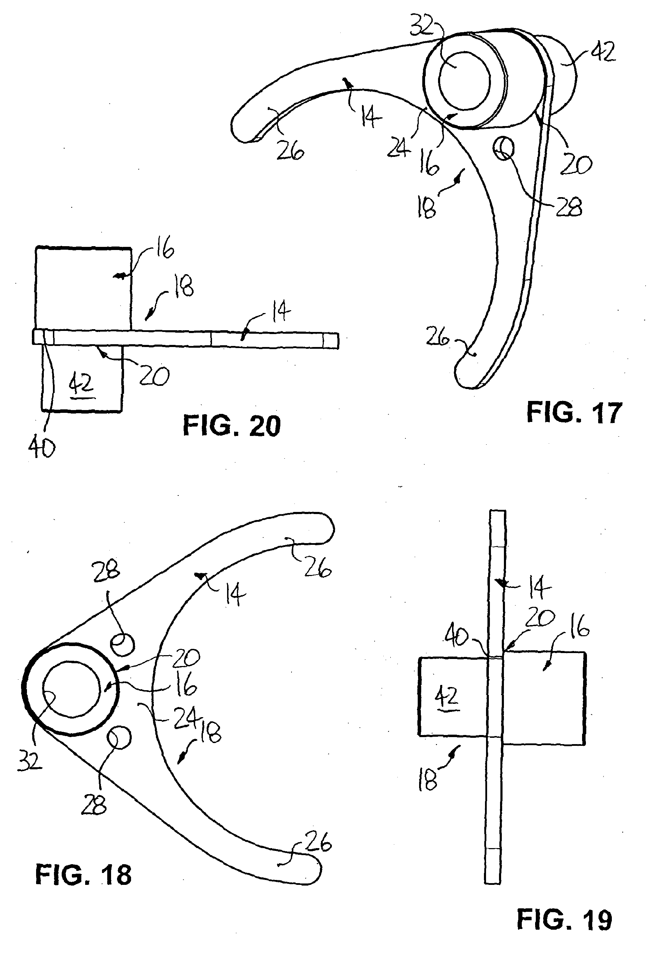

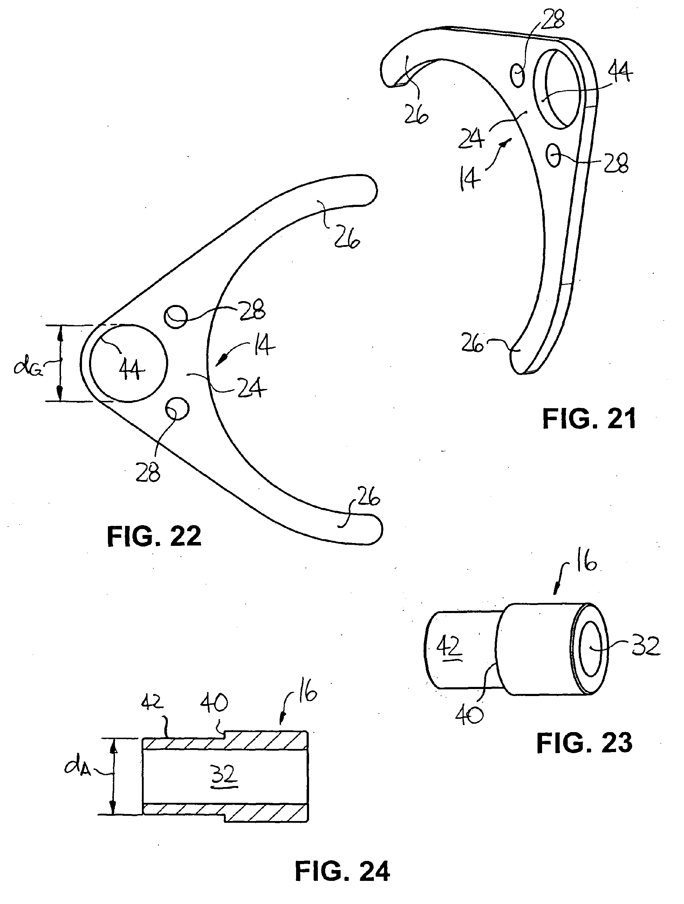

Gemäß den Fig. 23 und 24 weist die Buchse 16 beim zweiten Ausführungsbeispiel außenumfangsseitig keine Radialnut auf, sondern ist dort unter Ausbildung eines Ringbundes 40 mit einem Absatz 42 versehen. Der ebenfalls aus einem Flachmaterial bestehende Grundkörper 14 hingegen hat gemäß den Fig. 21 und 22 keine im wesentlichen U-förmige Aussparung 30, sondern weist im Bereich der Basis 24 eine kreisförmige Öffnung 44 auf. Am Absatz 42 hat die Buchse 16 einen Außendurchmesser d_{A} (Fig. 24), der im wesentlichen dem Innendurchmesser d_{G} (Fig. 22) der Öffnung 44 im Grundkörper 14 entspricht. Zur Ausbildung des Verbunds 18 ist gemäß den Fig. 17 bis 20 die Buchse 16 mit ihrem Absatz 42 soweit in die Öffnung 44 des Grundkörpers 14 eingesteckt, daß der Ringbund 40 der Buchse 16 an dem Grundkörper 14, genauer dessen in Fig. 20 oberer Hauptfläche anliegt.

Es ist ersichtlich, daß somit zwischen dem Grundkörper 14 und der Buchse 16 ein Formschluß hergestellt ist, der bewirkt, daß der Grundkörper 14 und die Buchse 16 schon vor der Umspritzung mit dem Kunststoff 22 weder weiter aufeinander zu noch in einer Richtung senkrecht zur Mittelachse der Buchse 16 auseinander bewegt werden können. Den jeweiligen Erfordernissen entsprechend kann auch beim zweiten Ausführungsbeispiel dem Formschluß ein Kraftschluß zwischen Grundkörper 14 und Buchse 16 überlagert werden. Hierzu sind lediglich die Durchmessertoleranzen zwischen dem Absatz 42 der Buchse 16 und der Öffnung 44 im Grundkörper 14 geeignet aufeinander abzustimmen (Übermaß beim Außendurchmesser d_{A} des Buchsenabsatzes 42 bzw. Untermaß beim Innendurchmesser d_{G} der Grundkörperöffnung 44).

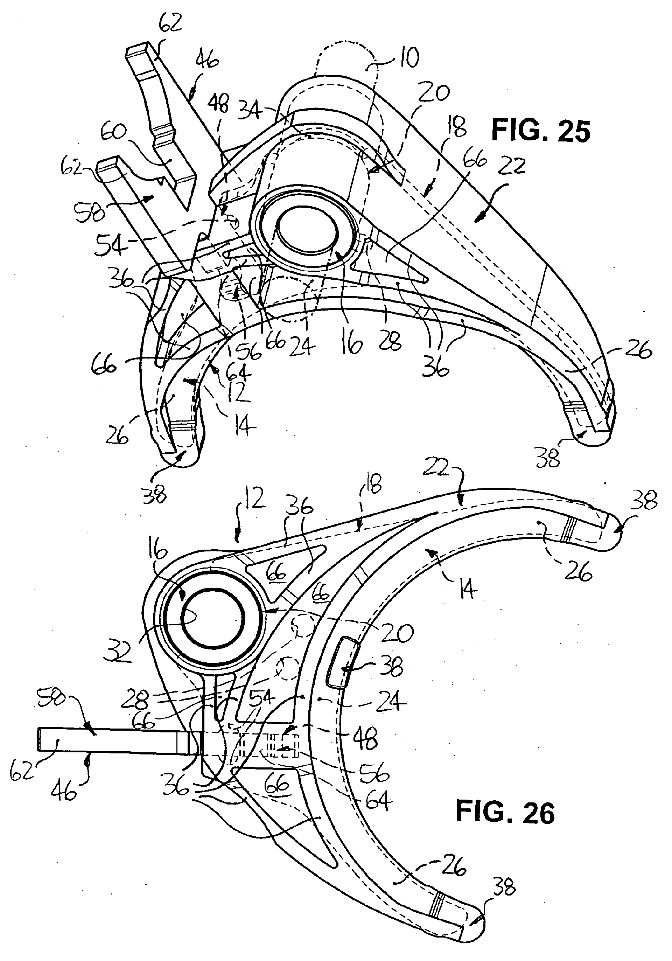

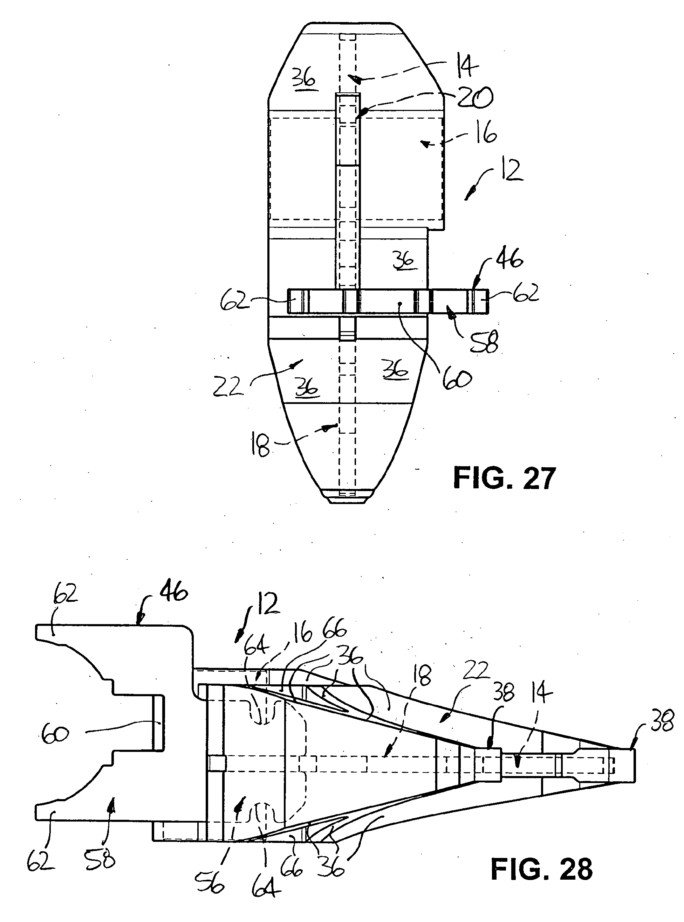

Die Fig. 25 bis 34 betreffen ein drittes Ausführungsbeispiel einer Vorrichtung zur Übertragung von Schaltbewegungen in einem Kraftfahrzeug-Schaltgetriebe, welches im Folgenden ebenfalls nur insoweit erläutert werden soll, als es sich von den vorhergehenden Ausführungsbeispielen unterscheidet. Bei den Figuren zum dritten Ausführungsbeispiel wurde auf eine Einzeldarstellung der Buchse 16 als Träger der Schaltgabel 12 verzichtet, weil sich diese hier nicht von der in den Fig. 11 und 12 gezeigten Buchse 16 unterscheidet. Auch bestehen beim dritten Ausführungsbeispiel hinsichtlich der Ausbildung des form- und ggf. kraftschlüssigen Verbunds zwischen dem Grundkörper 14 und der Buchse 16 keinerlei Unterschiede zu dem oben unter Bezugnahme auf die Fig. 1 bis 12 beschriebenen ersten Ausführungsbeispiel.

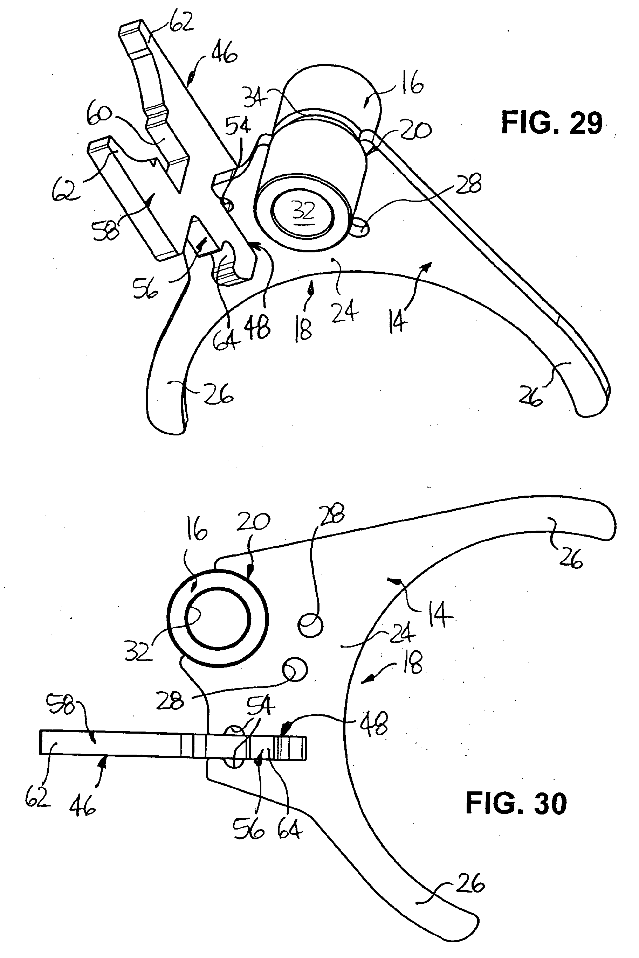

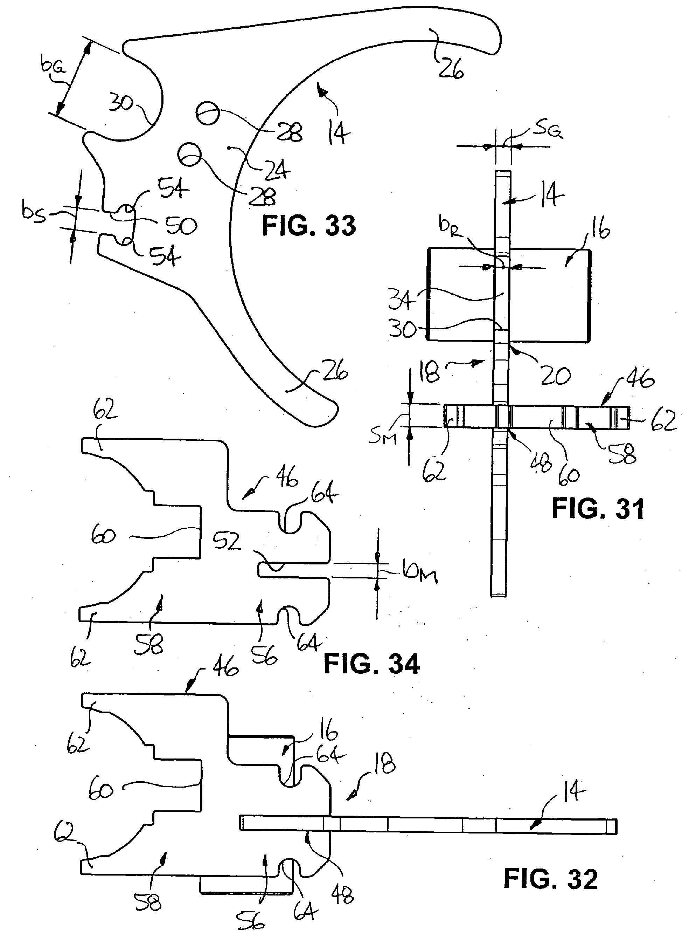

Im Gegensatz zu den vorangehenden Ausführungsbeispielen hat die Vorrichtung gemäß dem dritten Ausführungsbeispiel auch einen in Fig. 34 separat gezeigten Mitnehmer 46, der in an sich bekannter Weise der Übertragung von Bewegungen von einem Betätigungselement (nicht dargestellt) des Kraftfahrzeug-Schaltgetriebes, beispielsweise eines an einer Schaltwelle angebrachten Schaltfingers, auf die Schaltgabel 12 dient. Eine Besonderheit dieses Ausführungsbeispiel besteht darin, daß in dem in den Fig. 29 bis 32 gezeigten "Gerippe" der Schaltgabel 12, d.h. in dem Verbund 18 auch der Mitnehmer 46 integriert, genauer mit dem Grundkörper 14 form- und ggf. kraftschlüssig zusammengesetzt ist, und dieser Verbund 18 zur dauerhaften Fixierung ebenfalls im Bereich der Verbindungsstellen 48 von Mitnehmer 46 und Grundkörper 14 mit dem Kunststoff 22 umspritzt ist, wie die Fig. 25 bis 28 zeigen.

Wie aus den Fig. 33 und 34 ersichtlich ist, sind sowohl der Grundkörper 14 als auch der Mitnehmer 46, die beide aus einem Flachmaterial bestehen, jeweils mit einem Schlitz 50, 52 versehen. Hierfür wurde die Basis 24 des Grundkörper 14 gegenüber den vorangehenden Ausführungsbeispielen verbreitert, so daß sich der Schlitz 50 ausgehend von der in Fig. 33 linken Konturfläche des Grundkörpers 14 der Aussparung 30 benachbart in den Grundkörper 14 hineinerstrecken kann. Am Ende des Schlitzes 50 sind zu beiden Seiten des Schlitzes 50 Aussparungen 54 vorgesehen, die vornehmlich dem Abbau von Spannungsspitzen im Grundkörper 14 im Betrieb der Schaltgabel 12 dienen.

Gemäß Fig. 34 hat der Mitnehmer 46, der aus dem gleichen Werkstoff wie der Grundkörper 14 bestehen kann aber nicht muß, neben einem in der Grundform im wesentlichen quadratischen Befestigungsabschnitt 56, in den sich der Schlitz 52 hineinerstreckt, einen sich an den Befestigungsabschnitt 56 anschließenden, in der Grundform im wesentlichen rechteckigen Mitnahmeabschnitt 58. Letzterer ist dem Schlitz 52 diametral gegenüberliegend mit einer Aussparung 60 - auch "Schaltmaul" genannt - versehen, die in an sich bekannter Weise der Aufnahme eines Betätigungselements (nicht gezeigt) des Kraftfahrzeug-Schaltgetriebes, etwa eines an einer Schaltwelle angebrachten Schaltfingers dient. Die Aussparung 60 wird im dargestellten Ausführungsbeispiel zu beiden Seiten jeweils von einem Arm 62 begrenzt, der ebenfalls in an sich bekannter Weise als Sperrelement dient, um zu verhindern, daß zwei Gänge gleichzeitig eingelegt werden. Zu beiden Seiten des Schlitzes 52 ist der Befestigungsabschnitt 56 des Mitnehmers 46 gemäß insbesondere Fig. 34 im übrigen noch mit im wesentlichen U-förmigen Aussparungen 64 versehen. Während in dem in den Fig. 25 bis 28 gezeigten fertigen Zustand der Schaltgabel 12 der Mitnehmer 46 mit seinem Mitnahmeabschnitt 58 aus dem Kunststoff 22 herausragt, ist der Befestigungsabschnitt 56 des Mitnehmers 46 im Kunststoff 22 eingebettet, wobei die Aussparungen 64 Hinterschnitte für den Kunststoff 22 bilden.

Wie des weiteren den Fig. 31, 33 und 34 zu entnehmen ist, weist der Schlitz 52 im Mitnehmer 46 eine lichte Breite b_{M} auf, die im wesentlichen der Dicke s_{G} des Grundkörpers 14 entspricht, während der Schlitz 50 im Grundkörper 14 eine lichte Breite b_{S} hat, die im wesentlichen der Dicke s_{M} des Mitnehmers 46 entspricht. Zur Ausbildung des in den Fig. 29 bis 32 dargestellten Verbunds 18 ist der Mitnehmer 46 schließlich derart auf den Grundkörper 14 aufgesteckt, daß die Schlitze 50, 52 in der Art eines Steckspiels ineinandergreifen, wobei das Ende des einen Schlitzes 50 am Ende des anderen Schlitzes 52 anliegt. Im Ergebnis liegen der Grundkörper 14 und der Mitnehmer 46 senkrecht zueinander bzw. bilden in einer Seitenansicht des Verbunds 18 gesehen ein Kreuz (siehe Fig. 31).

Es ist ersichtlich, daß somit (auch) zwischen dem Grundkörper 14 und dem Mitnehmer 46 ein Formschluß hergestellt ist, der, solange der Verbund 18 noch nicht mit dem Kunststoff 22 umspritzt ist, lediglich ein Auseinanderziehen von Grundkörper 14 und Mitnehmer 46 gestattet. Auch bei der Anbindung des Mitnehmers 46 am Grundkörper 14 kann dem erwähnten Formschluß den jeweiligen Erfordernissen entsprechend ein Kraftschluß überlagert sein. Hierzu sind nur die Toleranzen zwischen der Breite b_{S} des Schlitzes 50 im Grundkörper 14 und/oder der Breite b_{M} des Schlitzes 52 im Befestigungsabschnitt 56 des Mitnehmers 46 einerseits und der Dicke s_{M} bzw. s_{G} am jeweils anderen Teil 46, 14 andererseits geeignet aufeinander abzustimmen (Untermaß bei der Breite b_{S} und/oder b_{M} des Schlitzes 50 bzw. 52 und/oder Übermaß bei der Dicke s_{M} und/oder s_{G} des Mitnehmers 46 bzw. des Grundkörpers 14).

In den Fig. 25 und 26 ist im übrigen noch zu erkennen, daß die Kunststoffumspritzung 22 des Verbunds 18 durch geeignete Gestaltung der Spitzgießform auch mit Aussparungen 66 ausgebildet werden kann, um Rissen infolge Materialschrumpfung des nach dem Spitzgießvorgang abkühlenden Kunststoffs 22 vorzubeugen.

Das oben geschilderte Herstellverfahren umfaßt bei dem dritten Ausführungsbeispiel zusätzlich die Vorfertigung des Mitnehmers 46, die analog der Vorfertigung des Grundkörpers 14 erfolgen kann aber nicht muß. Sodann wird beim Zusammensetzen des Verbunds 18 auch der Mitnehmer 46 auf die beschriebene Weise form- und ggf. kraftschlüssig zum Grundkörper 14 gefügt bevor der ebenfalls den Mitnehmer 46 aufweisende Verbund 18 in die Spritzgießform eingelegt und auch im Bereich der Verbindungsstellen 48 von Mitnehmer 46 und Grundkörper 14 mit dem Kunststoff 22 umspritzt wird.

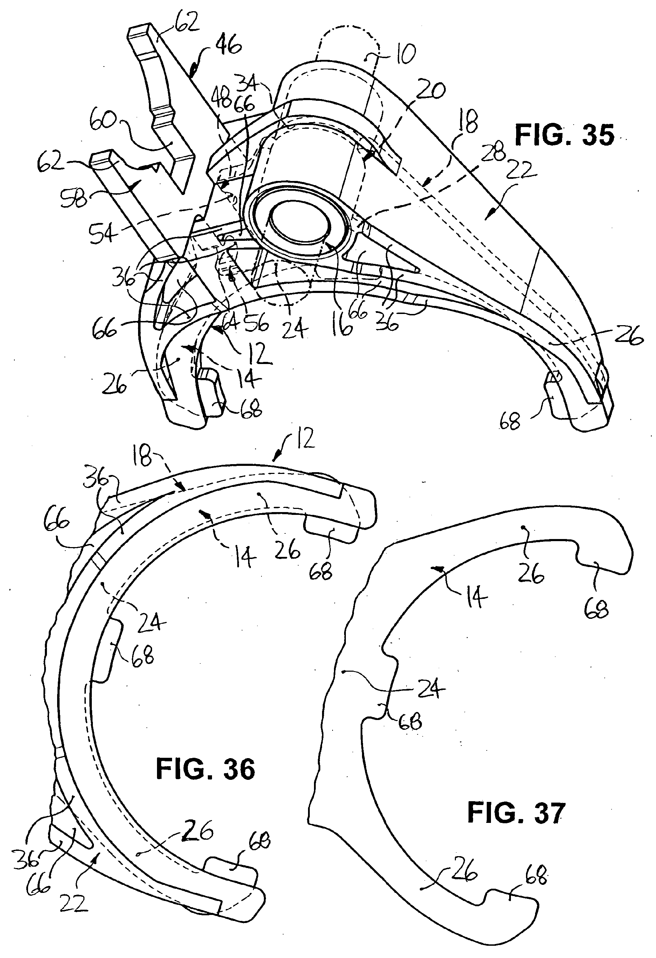

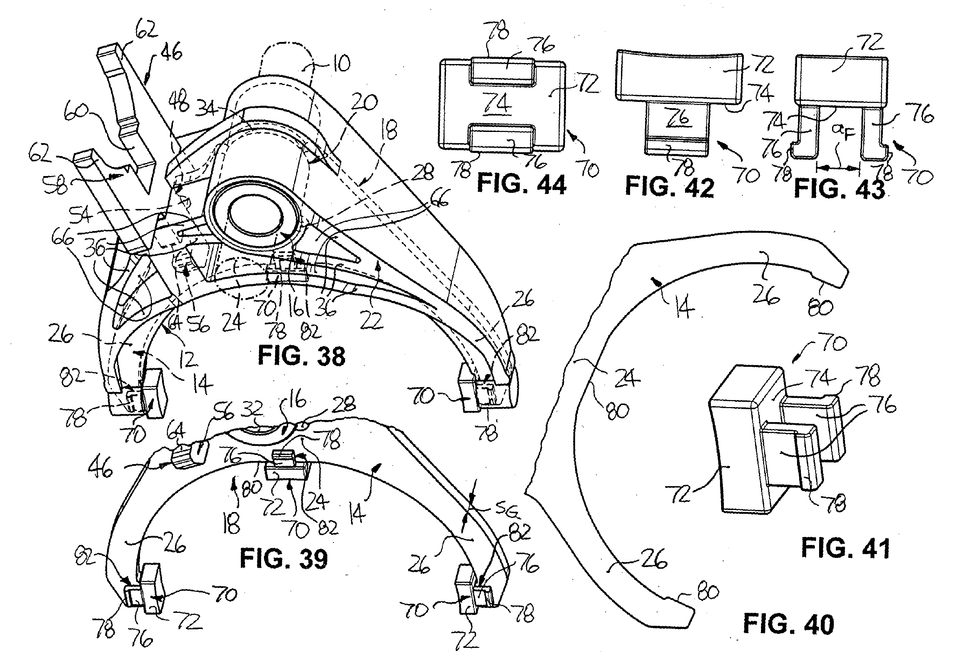

Die Fig. 35 bis 37 einerseits und die Fig. 38 bis 44 andererseits zeigen zwei Varianten des dritten Ausführungsbeispiels, die sich von dem unter Bezugnahme auf die Fig. 25 bis 34 beschriebenen dritten Ausführungsbeispiel lediglich im Hinblick auf die Ausbildung der Eingriffsabschnitte unterscheiden, über die die Schaltgabel 12 mit der Schalt- bzw. Schiebemuffe (nicht dargestellt) des Kraftfahrzeug-Schaltgetriebes wirkverbindbar ist.

Während gemäß den Fig. 25, 26 und 28 die Eingriffsabschnitte 38 an der Schaltgabel 12 durch die Kunststoffumspritzung 22 selbst ausgebildet sind, bildet bei der ersten Variante gemäß den Fig. 35 bis 37 der Grundkörper 14 die Eingriffsabschnitte aus. Wie insbesondere die Fig. 37 zeigt, hat der Grundkörper 14 hierfür drei sich nach innen erstreckende Vorsprünge 68, von denen jeweils ein Vorsprung 68 am Ende des jeweiligen Arms 26 des Grundkörpers 14 sitzt, während der in Fig. 37 mittlere, etwas breitere Vorsprung 68 von der Basis 24 des Grundkörpers 14 ausgeht. Aus den Fig. 35 und 36 ist schließlich ersichtlich, daß die Vorsprünge 68 des Grundkörpers 14 an der fertigen Schaltgabel 12 über die Kunststoffumspritzung 22 hinaus nach innen vorstehen, um direkt mit der Schalt- bzw. Schiebemuffe (nicht gezeigt) des Kraftfahrzeug-Schaltgetriebes einzugreifen.

Bei der zweiten Variante gemäß den Fig. 38 bis 44 hingegen sind die Eingriffsabschnitte jeweils durch ein in den Fig. 41 bis 44 einzeln dargestelltes Formteil 70 ausgebildet. Das Formteil 70, das beispielsweise aus einem faserverstärkten Kunststoff bestehen kann, hat einen im wesentlichen quaderförmigen Grundkörper 72, von dessen Unterseite 74 sich an jede Längskante des Grundkörpers 72 anschließend ein Arm 76 wegerstreckt. Die beiden gemäß den Fig. 43 und 44 parallel verlaufenden, in der Vorderansicht gemäß Fig. 42 gesehen im Vergleich zum Grundkörper 72 schmaleren Arme 76 weisen endseitig auf ihren voneinander abgewandten Seiten jeweils einen Vorsprung 78 auf, der im fertigen Zustand der Schaltgabel 12 gemäß Fig. 38 vom Kunststoff 22 hintergriffen wird. Der in Fig. 43 gezeigte lichte Abstand a_{F} der Arme 76 ist so gewählt, daß er im wesentlichen der in Fig. 39 angedeuteten Dicke s_{G} des Grundkörpers 14 entspricht. Wie des weiteren in der Fig. 40 zu erkennen ist, weist die innere Konturfläche des Grundkörpers 14 an jedem Ende der Arme 26 sowie mittig an der Basis 24 einen geraden bzw. ebenen Abschnitt 80 auf, auf den gemäß Fig. 39 jeweils ein Formteil 70 zur Komplettierung des Verbunds 18 aufgesteckt ist, so daß am jeweiligen ebenen Abschnitt 80 des Grundkörpers 14 das zugeordnete Formteil 70 mit seiner Unterseite 74 anliegt. Aus der Fig. 38 ist schließlich ersichtlich, daß der Verbund 18 auch im Bereich der Verbindungsstellen 82 zwischen dem Grundkörper 14 und dem jeweiligen Formteil 70 mit dem Kunststoff 22 umspritzt ist, um die Formteile 70 am Grundkörper 14 festzulegen.

Das oben geschilderte Herstellverfahren umfaßt bei der zweiten Variante des dritten Ausführungsbeispiels zusätzlich noch die Vorfertigung der Formteile 70 als Eingriffsabschnitte der Schaltgabel 12, z.B. durch Spitzgießen aus Kunststoff. Die Formteile 70 werden sodann auf die beschriebene Weise auf den Grundkörper 14 aufgesteckt bevor der somit ebenfalls die Formteile 70 aufweisende Verbund 18 in die Spritzgießform eingelegt und auch im Bereich der Verbindungsstellen 82 zwischen dem Grundkörper 14 und dem jeweiligen Formteil 70 mit dem Kunststoff 22 umspritzt wird.

Zu erwähnen ist an dieser Stelle noch, daß die anhand des dritten Ausführungsbeispiels erläuterten Varianten der Eingriffsabschnitte zwischen Schaltgabel 12 und Schalt- bzw. Schiebemuffe den jeweiligen Funktionserfordernissen entsprechend an jedem der hier beschriebenen Ausführungsbeispiele eingesetzt werden können.

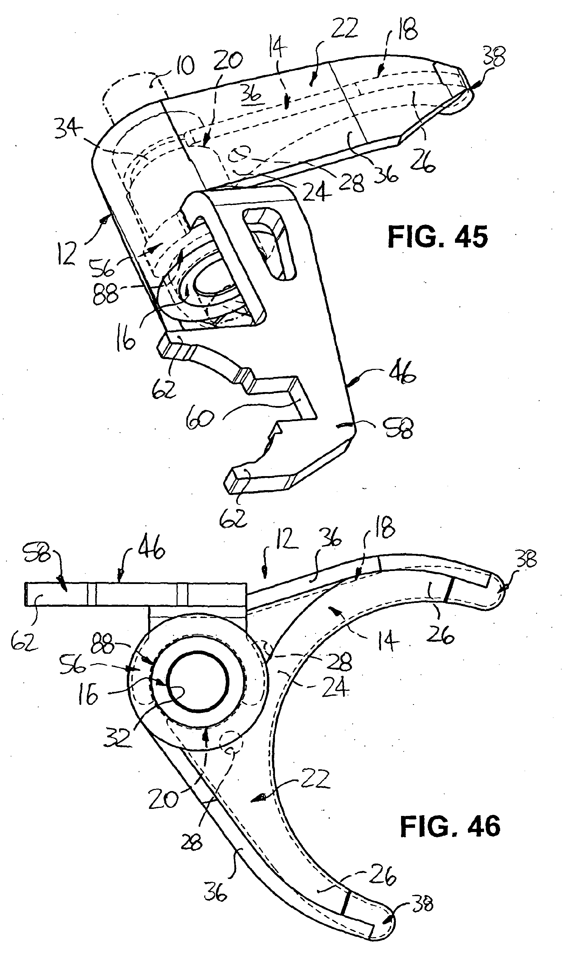

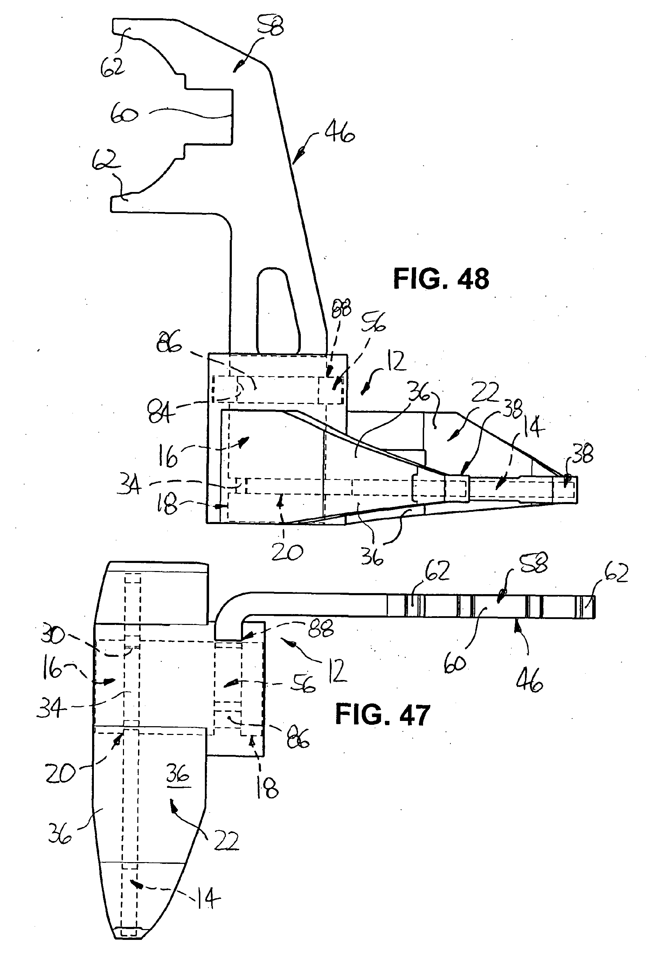

Die Fig. 45 bis 57 veranschaulichen ein viertes Ausführungsbeispiel einer Vorrichtung zur Übertragung von Schaltbewegungen in einem Kraftfahrzeug-Schaltgetriebe, welches nachfolgend nur insoweit beschrieben werden soll, als es sich von den vorhergehenden Ausführungsbeispielen unterscheidet. Bei den Figuren zum vierten Ausführungsbeispiel wurde auf eine Einzeldarstellung des Grundkörpers 14 verzichtet, da sich dieser nicht von dem in den Fig. 9 und 10 gezeigten Grundkörper 14 unterscheidet. Auch bestehen beim vierten Ausführungsbeispiel im Hinblick auf die Ausbildung des form- und ggf. kraftschlüssigen Verbunds zwischen dem Grundkörper 14 und der Buchse 16 keinerlei Unterschiede zu dem bereits unter Bezugnahme auf die Fig. 1 bis 12 beschriebenen ersten Ausführungsbeispiel.

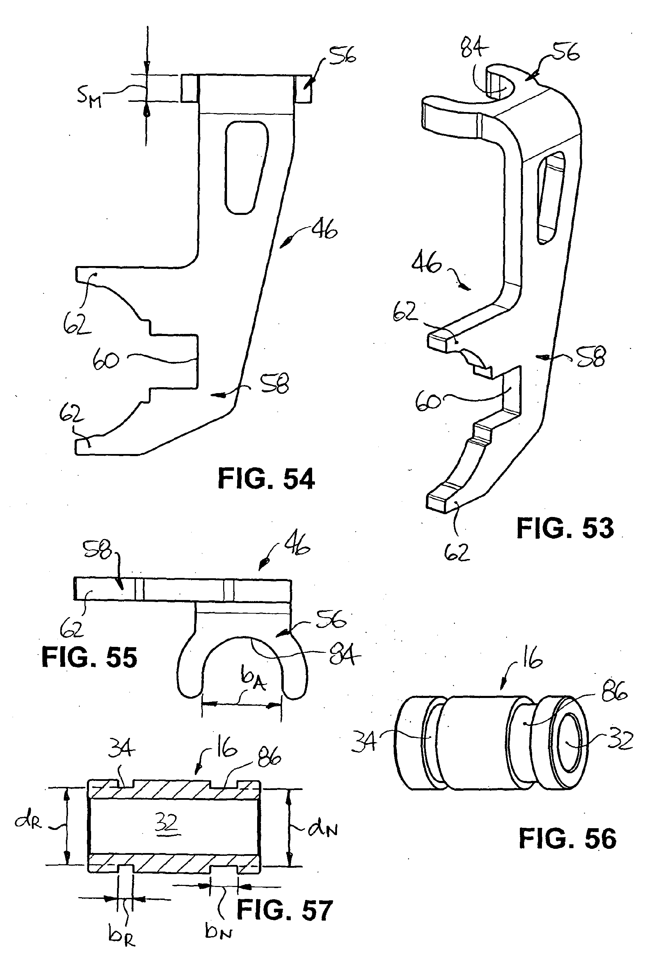

Auch beim vierten Ausführungsbeispiel ist ein Mitnehmer 46 vorgesehen, der in den Fig. 53 bis 55 einzeln dargestellt ist. Im Gegensatz zum dritten Ausführungsbeispiel ist der Mitnehmer 46 jedoch nicht am Grundkörper 14 angebracht, sondern an der Buchse 16 als Träger der Schaltgabel 12, wodurch die Schaltgabel 12 den axialen Abstand zwischen weiter auseinanderliegenden Angriffsorten zwischen dem Grundkörper 14 und der Schalt- bzw. Schiebemuffe (nicht gezeigt) einerseits und dem Mitnehmer 46 und dem zugeordneten Betätigungselement, z.B. Schaltfinger (nicht dargestellt) andererseits zu überbrücken vermag, wie insbesondere aus der Fig. 45 ersichtlich ist.

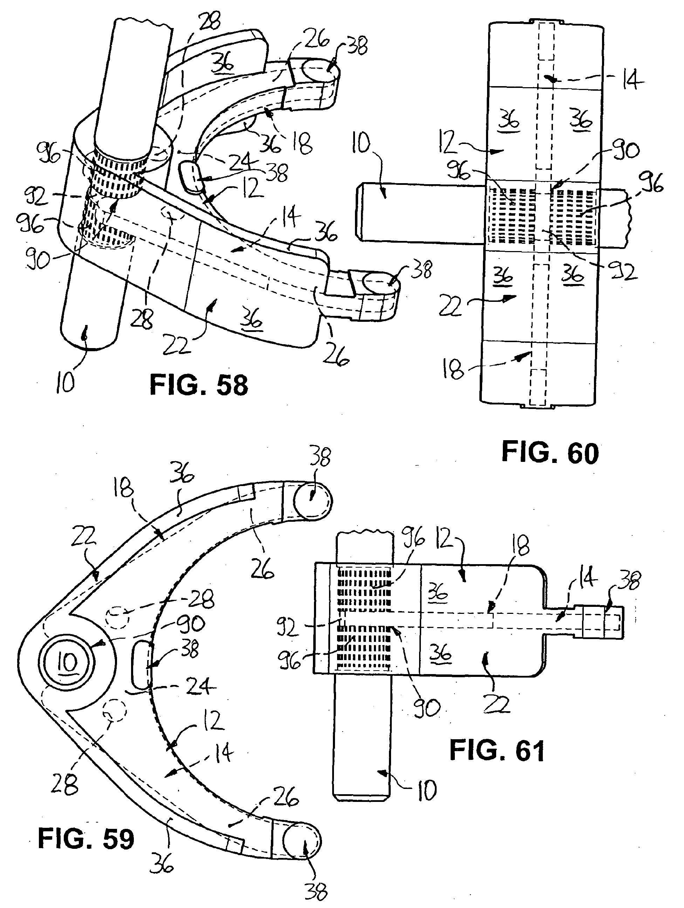

Gemäß den Fig. 53 bis 55 ist der wiederum aus einem Flachmaterial bestehende Mitnehmer 46 abgekröpft, so daß sich der Befestigungsabschnitt 56 des Mitnehmers 46 im wesentlichen senkrecht zum Mitnahmeabschnitt 58 des Mitnehmers 46 erstreckt. Wie insbesondere die Fig. 55 zeigt, weist der im dargestellten Ausführungsbeispiel gabelartige Befestigungsabschnitt 56 des Mitnehmers 46 eine im wesentlichen U-förmige Aussparung 84 auf, die eine lichte Breite b_{A} hat. Zugleich ist die Buchse 16 gemäß insbesondere den Fig. 56 und 57 neben der Radialnut 34 zur Aufnahme des Grundkörpers 14 am Außenumfang mit einer weiteren Radialnut 86 versehen. Die Radialnut 86 ist derart dimensioniert, daß ihre Breite b_{N} (vergl. Fig. 57) im wesentlichen der Dicke s_{M} des Mitnehmers 46 (siehe Fig. 54) entspricht, während der Durchmesser d_{N} der Buchse 16 im Nutgrund der Radialnut 86 (vergl. Fig. 57) im wesentlichen der lichten Breite b_{A} der Aussparung 84 im Mitnehmer 46 (siehe Fig. 55) entspricht.

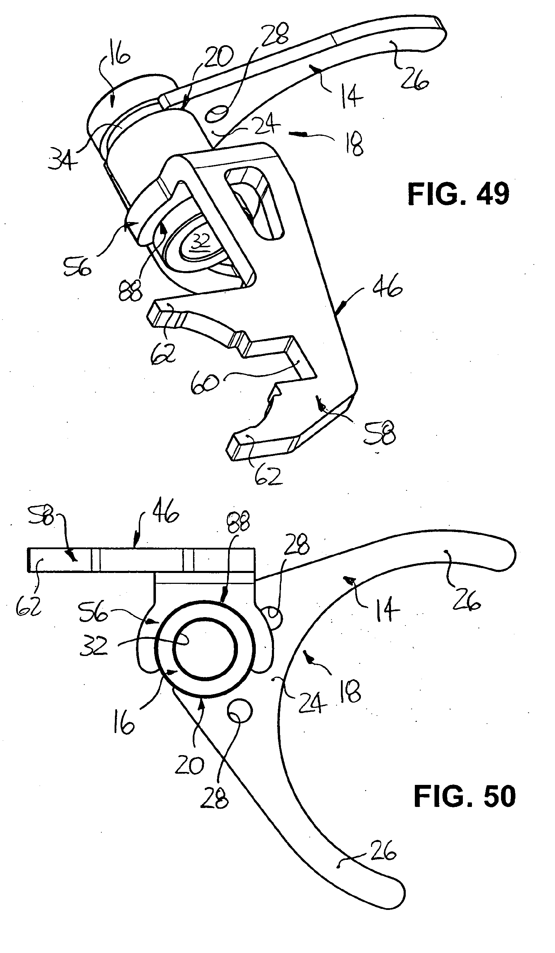

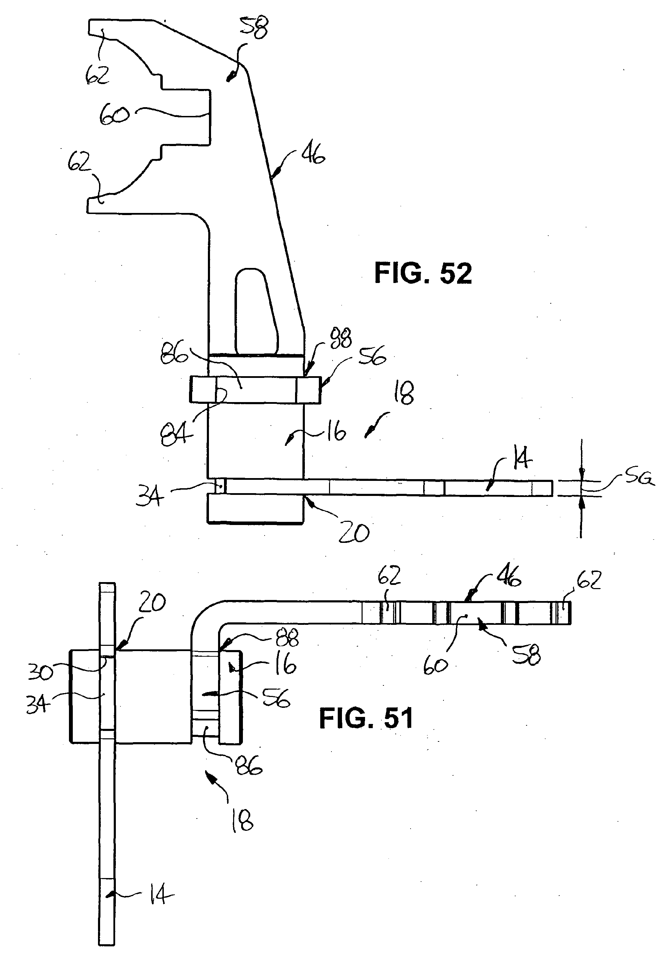

Wie insbesondere die Fig. 49 bis 52 zeigen, ist der Mitnehmer 46 derart auf die Buchse 16 aufgesteckt, daß deren Radialnut 86 und die Aussparung 84 des Mitnehmers 46 ineinandergreifen. Es ist ersichtlich, daß somit bei dem in den Fig. 49 bis 52 gezeigten Verbund 18 analog zu der Anbringung des Grundkörpers 14 an der Buchse 16 ein Formschluß zwischen dem Mitnehmer 46 und der Buchse 16 besteht, der Relativbewegungen dieser Teile in einer Richtung parallel zur Mittelachse der Buchse 16 (entspricht den Betätigungsrichtungen der Schaltgabel 12) sowie senkrecht dazu (ausgenommen ein Auseinanderbewegen von Mitnehmer 46 und Buchse 16 in vertikaler Richtung in den Fig. 50 und 51) verhindert. Diesem Formschluß kann wiederum ein Kraftschluß überlagert werden, indem die verbindungsrelevanten Abmessungen zur Ausbildung eines Preßsitzes geeignet toleriert werden (Untermaß bei der Breite b_{N} der Radialnut 86 bzw. Übermaß bei der Dicke s_{M} des Mitnehmers 46 und/oder Übermaß beim Durchmesser d_{N} der Buchse 16 im Nutgrund der Radialnut 86 bzw. Untermaß bei der lichten Breite b_{A} der Aussparung 84 im Befestigungsabschnitt 56 des Mitnehmers 46). Dieser form- und ggf. kraftschlüssige Verbund 18 ist wiederum durch Umspritzen mit Kunststoff 22 auch im Bereich der Verbindungsstellen 88 zwischen dem Mitnehmer 46 und der Buchse 16 dauerhaft gefesselt, wie den Fig. 45 bis 48 zu entnehmen ist.

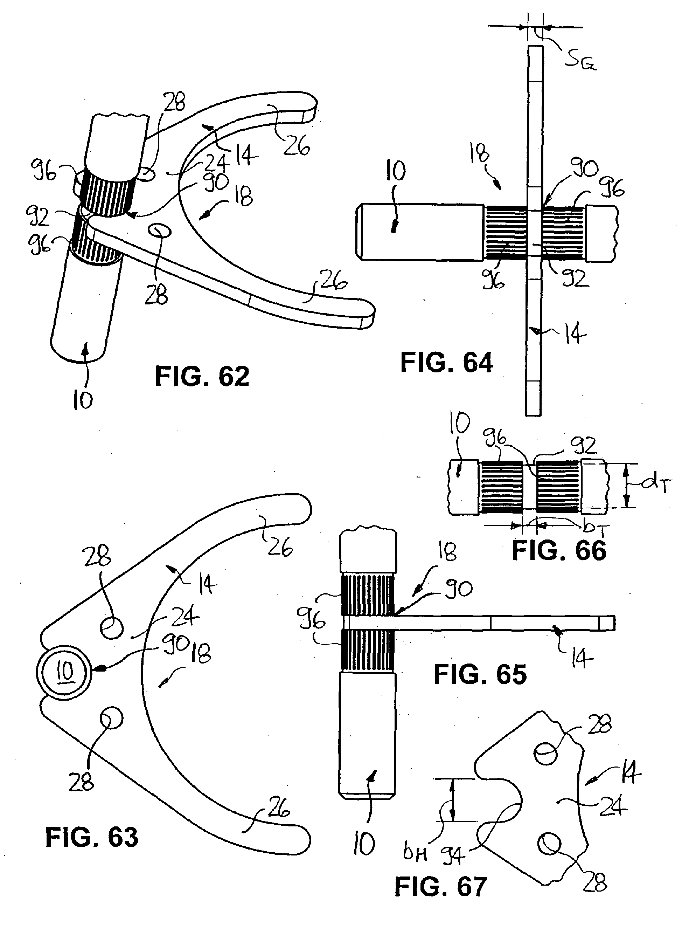

Den Fig. 58 bis 67 ist ein fünftes Ausführungsbeispiel einer Vorrichtung zur Übertragung von Schaltbewegungen in einem Kraftfahrzeug-Schaltgetriebe zu entnehmen, welches nachfolgend nur insoweit diskutiert werden soll, als es sich von den vorhergehenden Ausführungsbeispielen unterscheidet. Im Gegensatz zu den vorhergehenden Ausführungsbeispielen ist beim fünften Ausführungsbeispiel kein Träger für die Schaltgabel 12 vorgesehen, der Grundkörper 14 der Schaltgabel 12 sitzt vielmehr direkt auf der Schaltschiene 10. Genauer gesagt ist der Grundkörper 14 mit der Schaltschiene 10 form- und ggf. kraftschlüssig zu einem den Hauptanteil der im Betrieb des Kraftfahrzeug-Schaltgetriebes an der Schaltgabel 12 auftretenden Kräfte und Momente übertragenden Verbund 18 zusammengesetzt (siehe die Fig. 62 bis 65), welcher zumindest im Bereich der Verbindungsstellen 90 von Grundkörper 14 und Schaltschiene 10 mit dem Kunststoff 22 umspritzt ist (vergl. die Fig. 58 bis 61), um Grundkörper 14 und Schaltschiene 10 in ihrem form- und ggf. kraftschlüssigen Verbund 18 dauerhaft zu fixieren.

Beim fünften Ausführungsbeispiel ist die Schaltschiene 10 aus einem Rundmaterial gebildet, das vorzugsweise aus Stahl besteht. Wie insbesondere in den Fig. 62 und 64 bis 66 gut zu erkennen ist, ist die Schaltschiene 10 an vorbestimmter Stelle mit einer Radialnut 92 versehen, die gemäß Fig. 66 eine Breite b_{T} aufweist und deren Nutgrund einen Durchmesser d_{T} der Schaltschiene 10 definiert. Der Grundkörper 14 hingegen, der dem Grundkörper des ersten Ausführungsbeispiels ähnelt, besteht wiederum aus einem Flachmaterial und weist in seiner Basis 24 ausgehend von dem in Fig. 67 linken Rand eine im wesentlichen U-förmige Aussparung 94 auf, die eine lichte Breite b_{H} hat. Die Abmessungen der Radialnut 92 in der Schaltschiene 10 einerseits und die Abmessungen des Grundkörpers 14 im Bereich der Aussparung 94 andererseits sind derart aufeinander abgestimmt, daß die Breite b_{T} der Radialnut 92 im wesentlichen der Dicke s_{G} (siehe Fig. 64) des Grundkörpers 14 entspricht, während die lichte Breite b_{H} der Aussparung 94 im wesentlichen dem Durchmesser d_{T} der Schaltschiene 10 im Nutgrund der Radialnut 92 entspricht. Wie insbesondere die Fig. 62 bis 65 zeigen, ist der Grundkörper 14 analog dem ersten Ausführungsbeispiel derart auf die Schaltschiene 10 aufgesteckt, daß die Radialnut 92 und die Aussparung 94 ineinandergreifen, um den Verbund 18 auszubilden.

Es ist ersichtlich, daß somit ein Formschluß zwischen der Schaltschiene 10 und dem Grundkörper 14 besteht, der Relativbewegungen dieser Teile in einer Richtung parallel zur Mittelachse der Schaltschiene 10 (Betätigungsrichtungen der Schaltgabel 12) sowie senkrecht dazu (ausgenommen ein Auseinanderbewegen dieser Teile in horizontaler Richtung in Fig. 65) verhindert. Auch bei diesem Ausführungsbeispiel kann den jeweiligen Erfordernissen entsprechend dem Formschluß ein Kraftschluß durch Vorsehen geeigneter Toleranzen bei den verbindungsrelevanten Abmessungen überlagert werden (Untermaß bei der Breite b_{T} der Radialnut 92 in der Schaltschiene 10 bzw. Übermaß bei der Dicke s_{G} des Grundkörpers 14 und/oder Untermaß bei der Breite b_{H} der Aussparung 94 im Grundkörper 14 bzw. Übermaß beim Durchmesser d_{T} der Schaltschiene 10 im Nutgrund der Radialnut 92).

Wie bei den anderen Ausführungsbeispielen auch wird der so entstandene form- und ggf. kraftschlüssige Verbund 18 durch Umspritzen mit Kunststoff 22 wenigstens im Bereich der Verbindungsstellen 90 der Verbundteile 10, 14 gesichert. Bei dem fünften Ausführungsbeispiel besteht hierbei noch die Besonderheit, daß gemäß insbesondere der Fig. 66 die Schaltschiene 10 wenigstens auf einer, vorzugsweise auf beiden Seiten der Radialnut 92 mit einem Profil in Form einer Mikroverzahnung 96, einem Rändel od.dgl. versehen ist, das, wie insbesondere die Fig. 60 und 61 zeigen, ebenfalls mit dem Kunststoff 22 umspritzt ist, um die Schaltgabel 12 zusätzlich gegen ein Verdrehen auf der Schaltschiene 10 zu sichern. Ein derartiges Profil kann auch bei der Buchse 16 im ersten bis vierten Ausführungsbeispiel der Radialnut 34 und/oder 86 bzw. dem Ringbund 40 benachbart zum Einsatz kommen, um den Grundkörper 14 bzw. den Mitnehmer 46 zusätzlich gegen ein Verdrehen auf der Buchse 16 zu sichern, insbesondere im Falle einer Schaltgabel 12 in Festlagervariante.

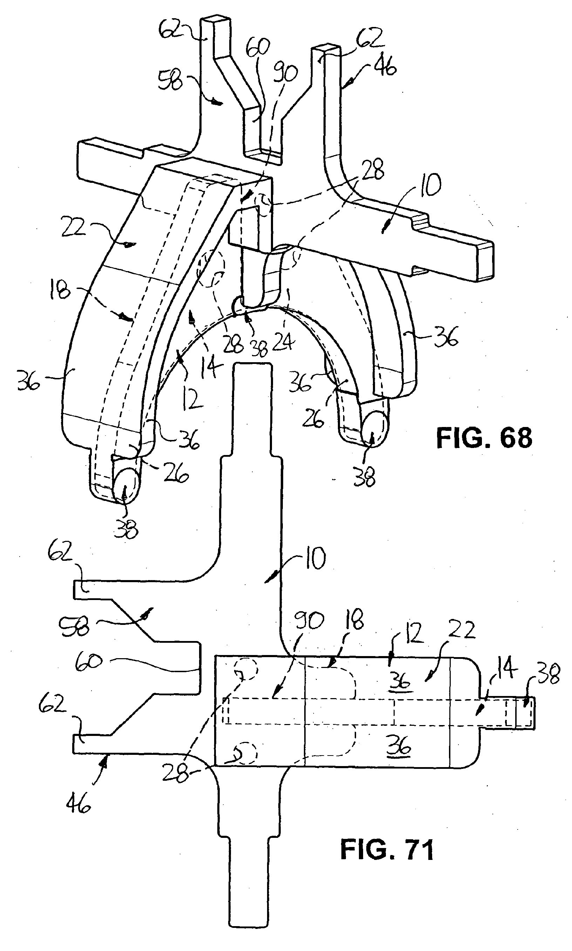

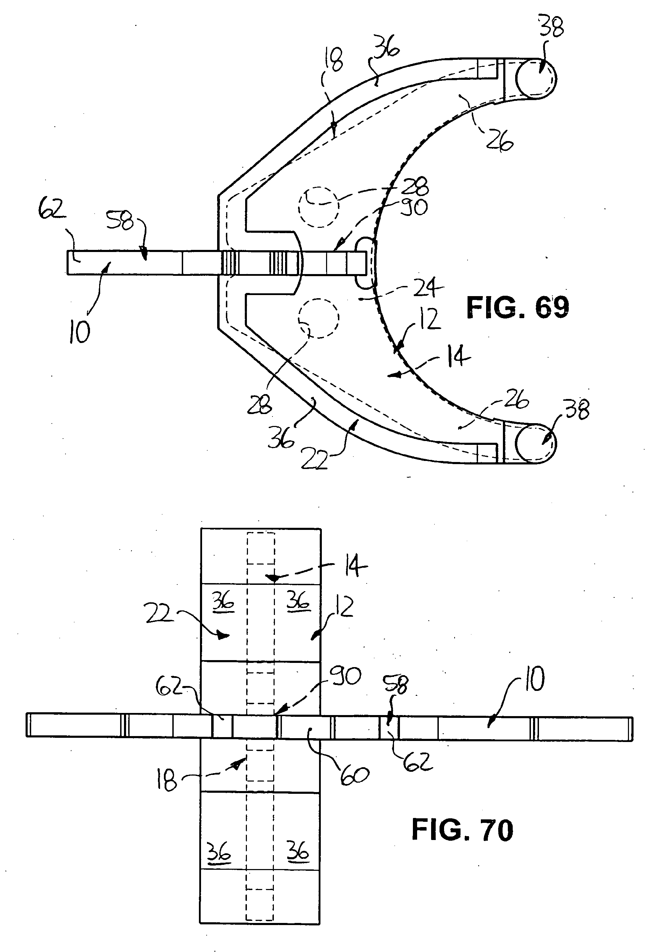

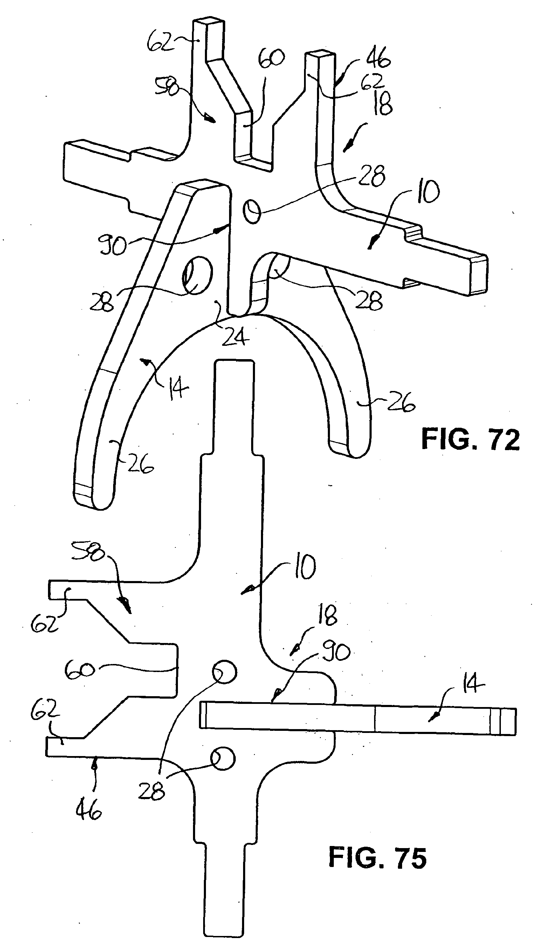

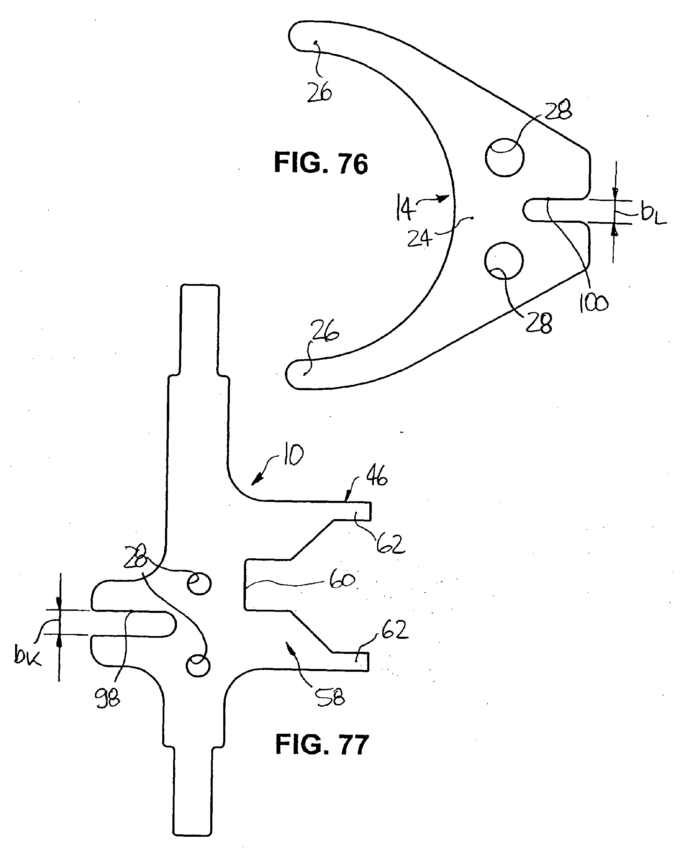

Auch bei dem in den Fig. 68 bis 77 dargestellten sechsten Ausführungsbeispiel einer Vorrichtung zur Übertragung von Schaltbewegungen in einem Kraftfahrzeug-Schaltgetriebe, welches abschließend nur insoweit beschrieben werden soll, als es sich von den vorhergehenden Ausführungsbeispielen unterscheidet, sitzt der Grundkörper 14 ohne weiteren Träger direkt auf der Schaltschiene 10. Genauer gesagt ist die in Fig. 77 einzeln gezeigte Schaltschiene 10 mit dem in Fig. 76 separat dargestellten Grundkörper 14 form- und ggf. kraftschlüssig zu einem den Hauptanteil der im Betrieb des Kraftfahrzeug-Schaltgetriebes an der Schaltgabel 12 auftretenden Kräfte und Momente übertragenden Verbund 18 zusammengesetzt (siehe die Fig. 72 bis 75), der zumindest im Bereich der Verbindungsstellen 90 von Schaltschiene 10 und Grundkörper 14 mit dem Kunststoff 22 umspritzt ist (vergl. die Fig. 68 bis 71), um Schaltschiene 10 und Grundkörper 14 in ihrem form- und ggf. kraftschlüssigen Verbund 18 dauerhaft zu fesseln.

Beim sechsten Ausführungsbeispiel ist sowohl die Schaltschiene 10 als auch der Grundkörper 14 aus einem Flachmaterial gebildet. Wie bei den anderen Ausführungsbeispielen können sich die Werkstoffe von Schaltschiene 10 und Grundkörper 14 jedoch den jeweiligen Funktionserfordernissen entsprechend unterscheiden. Im Ergebnis ist es auf einfache Weise möglich, wenn denn erforderlich, den Mitnehmer 46 als integralen Bestandteil der Schaltschiene 10 auszubilden, wie in den Fig. 68, 71, 72, 75 und 77 gut zu erkennen ist.

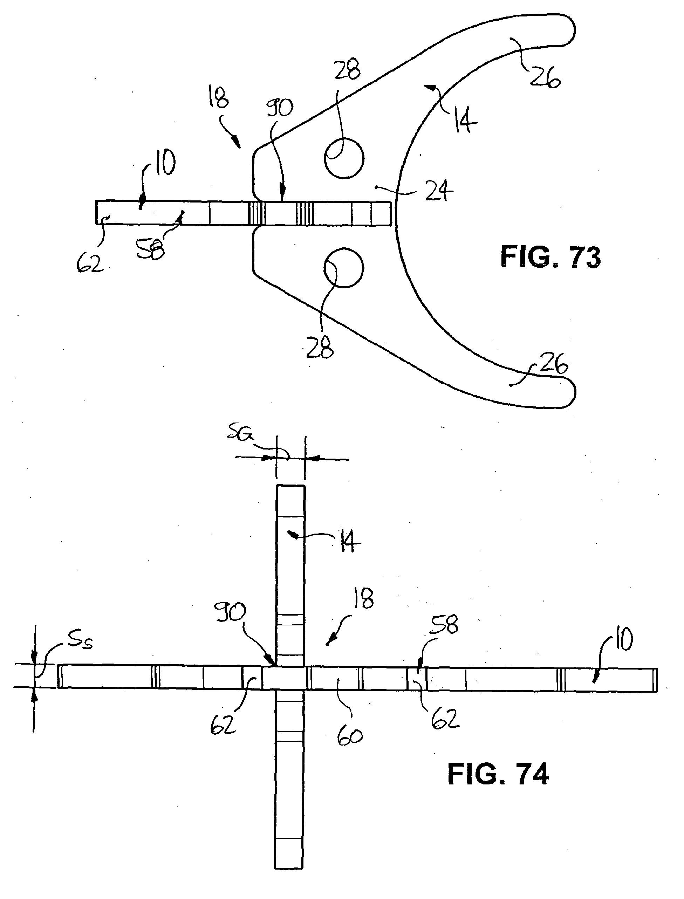

Gemäß den Fig. 76 und 77 sind die Schaltschiene 10 und der Grundkörper 14 des weiteren jeweils mit einem Schlitz 98, 100 versehen. Die Schlitze 98, 100 sind derart komplementär geformt, daß der Schlitz 98 in der Schaltschiene 10 eine lichte Breite b_{K} aufweist (siehe Fig. 77), die im wesentlichen der Dicke s_{G} des Grundkörpers 14 entspricht (vergl. Fig. 74), während der Schlitz 100 im Grundkörper 14 eine lichte Breite b_{L} hat (siehe Fig. 76), die im wesentlichen der Dicke s_{S} der Schaltschiene 10 entspricht (vergl. wiederum Fig. 74). Analog der Ausbildung des Verbunds von Grundkörper 14 und Mitnehmer 46 im dritten Ausführungsbeispiel ist beim sechsten Ausführungsbeispiel gemäß insbesondere den Fig. 72 bis 75 der Grundkörper 14 derart auf die Schaltschiene 10 aufgesteckt, daß die Schlitze 98, 100 ineinandergreifen, um den Verbund 18 auszubilden. Im Ergebnis bilden die Schaltschiene 10 und der Grundkörper 14 in einer Seitenansicht des Verbunds 18 gesehen (vergl. Fig. 74) ein Kreuz bzw. stehen senkrecht zueinander.

Es ist ersichtlich, daß somit ein Formschluß zwischen der Schaltschiene 10 und dem Grundkörper 14 der Schaltgabel 12 geschaffen ist, welcher, solange der Verbund 18 im Bereich der Verbindungsstellen 90 von Schaltschiene 10 und Grundkörper 14 noch nicht mit dem Kunststoff 22 umspritzt ist, nur ein Auseinanderziehen dieser Teile 10, 14 in horizontaler Richtung in den Fig. 73 und 75 gestattet. Diesem Formschluß kann wiederum den jeweiligen Handhabungs- und Verformungserfordernissen entsprechend ein Kraftschluß überlagert sein. Hierzu sind lediglich die Toleranzen zwischen der Schlitzbreite an dem einen Teil und der Dicke des anderen Teils geeignet aufeinander abzustimmen (Untermaß bei der Breite b_{K} des Schlitzes 98 in der Schaltschiene 10 und/oder Übermaß bei der Dicke s_{G} des Grundkörpers 14 bzw. Untermaß bei der Breite b_{L} des Schlitzes 100 im Grundkörper 14 und/oder Übermaß bei der Dicke s_{S} der Schaltschiene 10).

Es wird eine Vorrichtung zur Übertragung von Schaltbewegungen in einem Kraftfahrzeug-Schaltgetriebe offenbart, die eine Schaltschiene und eine an der Schaltschiene angeordnete Schaltgabel aufweist. Letztere hat einen Grundkörper und ggf. einen mit dem Grundkörper verbundenen Träger zum Lagern der Schaltgabel an der Schaltschiene. Erfindungsgemäß ist der Grundkörper mit der Schaltschiene oder dem Träger form- und ggf. kraftschlüssig zu einem den Hauptanteil der im Betrieb des Kraftfahrzeug-Schaltgetriebes an der Schaltgabel auftretenden Kräfte und Momente übertragenden Verbund zusammengesetzt, welcher zumindest im Bereich der Verbindungsstellen von Grundkörper, Schaltschiene bzw. Träger mit einem Kunststoff umspritzt ist, um Grundkörper, Schaltschiene bzw. Träger in ihrem form- und ggf. kraftschlüssigen Verbund dauerhaft zu fixieren. Im Ergebnis wird eine kompakte Vorrichtung geschaffen, welche die im Betrieb an der Schaltgabel auftretenden Kräfte und Momente ohne die Gefahr übermäßiger Verformungen zuverlässig zu übertragen vermag und zugleich leicht und wirtschaftlich herzustellen ist.

### Bezugszeichenliste

- 10: Schaltschiene
- 12: Schaltgabel
- 14: Grundkörper
- 16: Buchse
- 18: Verbund
- 20: Verbindungsstelle
- 22: Kunststoff
- 24: Basis
- 26: Arm
- 28: Loch
- 30: Aussparung
- 32: Innenumfangsfläche
- 34: Radialnut
- 36: Versteifungsrippe
- 38: Eingriffsabschnitt
- 40: Ringbund
- 42: Absatz
- 44: Öffnung
- 46: Mitnehmer
- 48: Verbindungsstelle
- 50, 52: Schlitz
- 54: Aussparung
- 56: Befestigungsabschnitt
- 58: Mitnahmeabschnitt
- 60: Aussparung
- 62: Arm
- 64, 66: Aussparung
- 68: Vorsprung
- 70: Formteil
- 72: Grundkörper
- 74: Unterseite
- 76: Arm
- 78: Vorsprung
- 80: ebener Abschnitt
- 82: Verbindungsstelle
- 84: Aussparung
- 86: Radialnut
- 88, 90: Verbindungsstelle
- 92: Radialnut
- 94: Aussparung
- 96: Mikroverzahnung
- 98, 100: Schlitz

- a_{F}: lichter Abstand der Arme 76
- b_{A}: lichte Breite der Aussparung 84
- b_{G}: lichte Breite der Aussparung 30
- b_{H}: lichte Breite der Aussparung 94
- b_{K}: lichte Breite des Schlitzes 98
- b_{L}: lichte Breite des Schlitzes 100
- b_{M}: lichte Breite des Schlitzes 52
- b_{N}: Breite der Radialnut 86
- b_{R}: Breite der Radialnut 34
- b_{S}: lichte Breite des Schlitzes 50
- b_{T}: Breite der Radialnut 92
- d_{A}: Außendurchmesser des Absatzes 42
- d_{G}: Innendurchmesser der Öffnung 44
- d_{N}: Durchmesser im Nutgrund der Radialnut 86
- d_{R}: Durchmesser im Nutgrund der Radialnut 34
- d_{T}: Durchmesser im Nutgrund der Radialnut 92
- s_{G}: Dicke des Grundkörpers 14
- _{SM}: Dicke des Mitnehmers 46
- s_{S}: Dicke der Schaltschiene 10

## Patentansprüche

1. Vorrichtung zur Übertragung von Schaltbewegungen in einem Kraftfahrzeug-Schaltgetriebe, mit einer Schaltschiene (10) und einer an der Schaltschiene (10) angeordneten Schaltgabel (12), die einen Grundkörper (14) und ggf. einen mit dem Grundkörper (14) verbundenen Träger (16) zum Lagern der Schaltgabel (12) an der Schaltschiene (10) aufweist, **dadurch gekennzeichnet, daß** der Grundkörper (14) mit der Schaltschiene (10) oder dem Träger (16) form- und ggf. kraftschlüssig zu einem den Hauptanteil der im Betrieb des Kraftfahrzeug-Schaltgetriebes an der Schaltgabel (12) auftretenden Kräfte und Momente übertragenden Verbund (18) zusammengesetzt ist, welcher zumindest im Bereich der Verbindungsstellen (90; 20) von Grundkörper (14), Schaltschiene (10) bzw. Träger (16) mit einem Kunststoff (22) umspritzt ist, um Grundkörper (14), Schaltschiene (10) bzw. Träger (16) in ihrem form- und ggf. kraftschlüssigen Verbund (18) dauerhaft zu fixieren.

2. Vorrichtung nach Anspruch 1, **dadurch gekennzeichnet,**
**daß** der Träger durch eine Buchse (16) ausgebildet ist, die außenumfangsseitig mit einer Radialnut (34) versehen ist, während der Grundkörper (14) aus einem Flachmaterial besteht und eine im wesentlichen U-förmige Aussparung (30) aufweist,
wobei die Radialnut (34) eine Breite (b_{R}) hat, die im wesentlichen der Dicke (s_{G}) des Grundkörpers (14) entspricht, während die Aussparung (30) eine lichte Breite (b_{G}) aufweist, die im wesentlichen dem Durchmesser (d_{R}) der Buchse (16) im Nutgrund der Radialnut (34) entspricht, und
wobei der Grundkörper (14) derart auf die Buchse (16) aufgesteckt ist, daß die Radialnut (34) und die Aussparung (30) ineinandergreifen, um den Verbund (18) auszubilden.

3. Vorrichtung nach Anspruch 1, **dadurch gekennzeichnet,**
**daß** der Träger durch eine Buchse (16) ausgebildet ist, die außenumfangsseitig unter Ausbildung eines Ringbundes (40) mit einem Absatz (42) versehen ist, während der Grundkörper (14) aus einem Flachmaterial besteht und eine kreisförmige Öffnung (44) aufweist,
wobei die Buchse (16) am Absatz (42) einen Außendurchmesser (d_{A}) hat, der im wesentlichen dem Innendurchmesser (d_{G}) der Öffnung (44) im Grundkörper (14) entspricht, und
wobei die Buchse (16) mit ihrem Absatz (42) soweit in die Öffnung (44) des Grundkörpers (14) eingesteckt ist, daß der Ringbund (40) der Buchse (16) am Grundkörper (14) anliegt, um den Verbund (18) auszubilden.

4. Vorrichtung nach Anspruch 1, **dadurch gekennzeichnet,**
**daß** die Schaltschiene (10) aus einem Rundmaterial besteht und außenumfangsseitig mit einer Radialnut (92) versehen ist, während der Grundkörper (14) aus einem Flachmaterial besteht und eine im wesentlichen U-förmige Aussparung (94) aufweist,
wobei die Radialnut (92) eine Breite (bT) hat, die im wesentlichen der Dicke (s_{G}) des Grundkörpers (14) entspricht, während die Aussparung (94) eine lichte Breite (b_{H}) aufweist, die im wesentlichen dem Durchmesser (d_{T}) der Schaltschiene (10) im Nutgrund der Radialnut (92) entspricht, und
wobei der Grundkörper (14) derart auf die Schaltschiene (10) aufgesteckt ist, daß die Radialnut (92) und die Aussparung (94) ineinandergreifen, um den Verbund (18) auszubilden.

5. Vorrichtung nach Anspruch 4, **dadurch gekennzeichnet, daß** die Schaltschiene (10) wenigstens auf einer Seite der Radialnut (92) eine Mikroverzahnung (96) od.dgl. aufweist, die ebenfalls mit dem Kunststoff (22) umspritzt ist.

6. Vorrichtung nach Anspruch 1, **dadurch gekennzeichnet,**
**daß** die Schaltschiene (10) sowie der Grundkörper (14) aus einem Flachmaterial bestehen und jeweils mit einem Schlitz (98, 100) versehen sind,
wobei der Schlitz (98) in der Schaltschiene (10) eine lichte Breite (b_{K}) aufweist, die im wesentlichen der Dicke (s_{G}) des Grundkörpers (14) entspricht, während der Schlitz (100) im Grundkörper (14) eine lichte Breite (b_{L}) hat, die im wesentlichen der Dicke (s_{S}) der Schaltschiene (10) entspricht, und
wobei der Grundkörper (14) derart auf die Schaltschiene (10) aufgesteckt ist, daß die Schlitze (98, 100) ineinandergreifen, um den Verbund (18) auszubilden.

7. Vorrichtung nach einem der vorhergehenden Ansprüche, die einen Mitnehmer (46) aufweist, mittels dessen Bewegungen von einem Betätigungselement des Kraftfahrzeug-Schaltgetriebes auf die Schaltgabel (12) übertragbar sind, **dadurch gekennzeichnet, daß** in dem Verbund (18) auch der Mitnehmer (46) mit dem Grundkörper (14) oder dem Träger (16) form- und ggf. kraftschlüssig zusammengesetzt ist und dieser Verbund (18) zur dauerhaften Fixierung ebenfalls im Bereich der Verbindungsstellen (48; 88) von Mitnehmer (46) und Grundkörper (14) bzw. Träger (16) mit dem Kunststoff (22) umspritzt ist.

8. Vorrichtung nach Anspruch 7, **dadurch gekennzeichnet,**
**daß** sowohl der Grundkörper (14) als auch der Mitnehmer (46) aus einem Flachmaterial bestehen und jeweils mit einem Schlitz (50, 52) versehen sind,
wobei der Schlitz (52) im Mitnehmer (46) eine lichte Breite (b_{M}) aufweist, die im wesentlichen der Dicke (s_{G}) des Grundkörpers (14) entspricht, während der Schlitz (50) im Grundkörper (14) eine lichte Breite (b_{S}) hat, die im wesentlichen der Dicke (s_{M}) des Mitnehmers (46) entspricht, und
wobei der Mitnehmer (46) derart auf den Grundkörper (14) aufgesteckt ist, daß die Schlitze (50, 52) ineinandergreifen.

9. Vorrichtung nach Anspruch 7, **dadurch gekennzeichnet,**
**daß** der Träger durch eine Buchse (16) ausgebildet ist, die außenumfangsseitig mit einer Radialnut (86) versehen ist, während der Mitnehmer (46) aus einem Flachmaterial besteht und eine im wesentlichen U-förmige Aussparung (84) aufweist,
wobei die Radialnut (86) eine Breite (b_{N}) hat, die im wesentlichen der Dicke (s_{M}) des Mitnehmers (46) entspricht, während dessen Aussparung (84) eine lichte Breite (b_{A}) aufweist, die im wesentlichen dem Durchmesser (d_{N}) der Buchse (16) im Nutgrund der Radialnut (86) entspricht, und
wobei der Mitnehmer (46) derart auf die Buchse (16) aufgesteckt ist, daß deren Radialnut (86) und die Aussparung (84) des Mitnehmers (46) ineinandergreifen.

10. Vorrichtung nach einem der vorhergehenden Ansprüche, bei der die Schaltgabel (12) mit wenigstens einem Eingriffsabschnitt (38) versehen ist, über den die Schaltgabel (12) mit einer Schaltmuffe des Kraftfahrzeug-Schaltgetriebes wirkverbindbar ist, **dadurch gekennzeichnet, daß** der Eingriffsabschnitt (38) durch die Kunststoffumspritzung (22) ausgebildet ist.

11. Vorrichtung nach einem der Ansprüche 1 bis 9, bei der die Schaltgabel (12) mit wenigstens einem Eingriffsabschnitt versehen ist, über den die Schaltgabel (12) mit einer Schaltmuffe des Kraftfahrzeug-Schaltgetriebes wirkverbindbar ist, **dadurch gekennzeichnet, daß** der Eingriffsabschnitt durch einen Teil (68) des Grundkörpers (14) ausgebildet ist, der über die Kunststoffumspritzung (22) vorsteht.

12. Vorrichtung nach einem der Ansprüche 1 bis 9, bei der die Schaltgabel (12) mit wenigstens einem Eingriffsabschnitt versehen ist, über den die Schaltgabel (12) mit einer Schaltmuffe des Kraftfahrzeug-Schaltgetriebes wirkverbindbar ist, **dadurch gekennzeichnet, daß** der Eingriffsabschnitt durch ein Formteil (70) ausgebildet ist, welches zur Komplettierung des Verbunds (18) auf den Grundkörper (14) aufgesteckt ist, wobei der Verbund (18) auch im Bereich der Verbindungsstellen (82) von Grundkörper (14) und Formteil (70) mit dem Kunststoff (22) umspritzt ist.

13. Vorrichtung nach einem der vorhergehenden Ansprüche, **dadurch gekennzeichnet, daß** es sich bei dem Kunststoff um vorzugsweise glasfaserverstärktes Polyamid 66 handelt.

14. Verfahren zur Herstellung einer Vorrichtung nach einem der vorhergehenden Ansprüche, **gekennzeichnet durch** die folgenden Schritte:
Vorfertigen des Grundkörpers (14) und der Schaltschiene (10) bzw. des Trägers (16),
form- und ggf. kraftschlüssiges Zusammensetzen des Grundkörpers (14) mit der Schaltschiene (10) bzw. dem Träger (16) zu dem den Hauptanteil der im Betrieb des Kraftfahrzeug-Schaltgetriebes an der Schaltgabel (12) auftretenden Kräfte und Momente übertragenden Verbund (18),
Einlegen des Verbunds (18) aus Grundkörper (14) und Schaltschiene (10) bzw. Träger (16) in eine Spritzgießform,
dauerhaftes Fixieren des Verbunds (18) aus Grundkörper (14) und Schaltschiene (10) bzw. Träger (16) **durch** Umspritzen des Verbunds (18) zumindest im Bereich der Verbindungsstellen (90; 20) von Grundkörper (14) und Schaltschiene (10) bzw. Träger (16) mit Kunststoff,
Ausformen des entstandenen Teils (10, 12; 12) aus der Spritzgießform und
ggf. Montage des entstandenen Teils (12) an der Schaltschiene (10).

15. Verfahren nach Anspruch 14, **dadurch gekennzeichnet, daß** ein Mitnehmer (46) vorgefertigt und mit dem Grundkörper (14) oder dem Träger (16) form- und ggf. kraftschlüssig zusammengesetzt wird bevor der sodann ebenfalls den Mitnehmer (46) aufweisende Verbund (18) in die Spritzgießform eingelegt und auch im Bereich der Verbindungsstellen (48; 88) von Mitnehmer (46) und Grundkörper (14) bzw. Träger (16) mit dem Kunststoff (22) umspritzt wird.

16. Verfahren nach Anspruch 14 oder 15, **dadurch gekennzeichnet, daß** wenigstens ein Formteil (70) als Eingriffsabschnitt der Schaltgabel (12) vorgefertigt und auf den Grundkörper (14) aufgesteckt wird bevor der sodann ebenfalls das Formteil (70) aufweisende Verbund (18) in die Spritzgießform eingelegt und auch im Bereich der Verbindungsstellen (82) von Grundkörper (14) und Formteil (70) mit dem Kunststoff (22) umspritzt wird.
